# EUROPEAN PATENT APPLICATION

(11) **EP 4 451 664 A1**
(43) Date of publication of application: **23.10.2024**
(21) Application number: 23218577.7
(22) Date of filing: 20.12.2023
(51) Int. Cl.: H04N 7/18, B63B 49/00, G01C 21/20

(54) **IMAGE DISPLAY PROCESSING SYSTEM AND IMAGE DISPLAY PROCESSING METHOD**

(30) Priority: 19.04.2023 JP 2023068667
(71) Applicant: Furuno Electric Company Limited, Hyogo 662-8580 (JP)
(72) Inventor: KOJIMA, Tatsuya, Nishinomiya-City, 662-8580 (JP)
(74) Representative: Müller Hoffmann & Partner

(57) **Abstract**

An image display processing system (501) and method are disclosed. The image display processing system comprises an image information acquiring module (21), a position information acquiring module (23), a terminal equipment (301) for receiving a specific time, and a display processing module (33). The method comprises acquiring an image information (21) including a plurality of images shot on a water-surface or underwater movable body (10) and shot times associated with the plurality of images shot on the water-surface or underwater movable body (10); acquiring a position information (23) including the positions of the movable body (10) and the position measurement times associated with the positions of the movable body (10); extracting an event (32) associated with the movable body (10); determining a specific time at which the event occurs based on the image information or the position information; and selecting an image and a position corresponding to the selected image, based on the shot time and the position measurement time associated with the specific time.

## Description

### TECHNICAL FIELD

The present invention relates to an image display processing system and an image display processing method.

### BACKGROUND OF THE INVENTION

Drive recorders for automobiles are widely used. For example, Patent Document 1 (Japanese Patent Application Laid-Open No. 2005, No. -14686) discloses a drive recorder including a camera mounted on a vehicle to shoot images inside and outside the vehicle, an image recorder for recording the images shot by the camera, a display for displaying the recorded images on a screen, a touch panel for outputting coordinate data of a pressed position disposed in front of the screen of the display, and a shooting direction changing means for changing the shooting direction of the camera according to the pressed position of the touch panel.

### Prior Art Document

### Patent Document

Patent Document 1: Japanese Patent Laid-Open No. 2005-14686
Patent Document 2: Japanese Patent Laid-Open No. 2011-257849

### SUMMARY OF THE INVENTION

### Problems to be solved by the invention

In recent years, in the movable body of a vessel, etc., a camera for shooting the surroundings of a movable body may be mounted. Although various sensors are mounted on the movable body, it may not be sufficient to display an image and a measurement result in a time-series when analyzing the image shot by the camera and the measurement result of the sensor later. This is because it is difficult to obtain the image and the measurement result corresponding to the situation in the movable body, which is of high interest to the user. It is also possible that the user misses the image and the measurement result to be analyzed.

The purpose of the present invention is to provide an image display processing system and an image display processing method capable of easily analyzing information concerning the movable body that is of great interest to the user.

### Means for Solving the Problem

In order to solve the above problem, an image display processing system of the present invention is provided with image information acquiring equipment for acquiring a time-series image information in which an image shot on the movable body is associated with the shot time of the image; a position information acquiring equipment for acquiring a time-series position information in which the position of the movable body is associated with the positioning time of the position; a terminal equipment to receive a specific time; and a display processing module. The display processing module acquires the image information and the position information; selects an image and a position associated with the specific time from the shot time and the positioning time; and performs display processing for associating and outputting display data to display the selected image and the position.

The configuration of displaying a plurality of pieces of information related to the movable body associated with the specific time, a state of the movable body at a time, can be easily grasped visually. For example, it is possible to display the image information and the position information corresponding to the time when the state in which the user should look back occurs, so that the user can look back more reliably. Therefore, it is possible to easily analyze information concerning the movable body that is of high interest to the user.

The image display processing system further includes an event analyzer that extracts or detects an occurrence of an event concerning the movable body based on either image information or position information and specifies the specific time of the event occurred. The display processing module may select a plurality of event corresponding image information based on the specific time of the event from among the time-series image information, select a plurality of event corresponding position information based on the specific time of the event from among the time-series position information, and perform display processing to display the selected event corresponding image information and the event corresponding position information is associated with the specific time.

For example, even when the user does not know the occurrence of the event in the movable body, the occurrence of the event can be automatically extracted. Since the image information and the position information corresponding to the occurrence of the event can be easily grasped, the cause of the occurrence of the event can be analyzed, and safety measures for the event can be planned.

The display processing module may further perform the display processing to a sequentially display either the image information corresponding to the event or the position information corresponding to a time zone after the specific time of the event, together with the specific time of the corresponding event. For example, since the image information and the position information during the execution of a predetermined work in the deck of the movable body can be grasped, later it is possible to easily analyze whether the work was executed according to a predetermined rule or not.

The time-series image information may include a plurality of images shot at a predetermined position of the movable body and the shot time associated with each of the images. The event analyzer may extract a predetermined operation in the movable body based on an image in which a predetermined extraction object included in any of the plurality of images included in the time-series image information has been taken.

The time-series image information corresponding to the time zone after the event-specific time can be referenced to analyze the cause of the occurrence of the event and plan safety measures for the event.

The event analyzer may analyze the movable body and extract whether it enters or departs a specific port based on the position information and speed. When the movable body enters or departs the port, the image information and the position information at the time of departure from the port can be grasped, so that, for example, whether the movable body enters or leaves the port according to a prescribed rule can be easily analyzed later.

The image display processing system of the present invention may further include a sensor information acquiring module for acquiring a time-series measurement information in which the measurement result measured by the sensor mounted on the movable body is associated with the time of the measurement. The display processing module further acquires measurement information, selects measurement information corresponding to a specific time, and performs display processing for displaying the selected measurement result in association with the image and the position information.

The event analyzer may further extract the occurrence of an event related to the movable body based on the measurement information and specify the specific time of the event. Based on the specific time of the event from the measurement information of the time-series, the display processing module corresponding to the event selects a plurality of events corresponding to the measurement information and performs display processing to display the selected event corresponding to the image information and the event corresponding to the position information in association with the specific time of the event occurred.

The measurement information may include a speed information indicating the speed of the movable body, and the event analyzer may further extract the departure or the port of entry of the movable body extracted based on the position and the speed.

The time-series measurement information may include a speed information indicating a time-series in the number of revolutions of a motor mounted on the movable body, and the event analyzer may extract the occurrence of an event based on the determination of whether the number of revolutions extracted based on the speed information is within an increase or decrease rate of a predetermined threshold. The time-series measurement information may include a speed command signal controlling the number of revolutions of the motor mounted on the movable body, and the event analyzer may extract the occurrence of an event based on the command signal.

The rapid speed of the motor can grasp the image information, the measurement information, and the position information when a sudden deceleration occurs, and the cause of the sudden deceleration can be easily analyzed later.

The time-series measurement information may include a steering angle command signal for controlling the steering angle of a steering device of the movable body. The event analyzer may analyze it and extract the occurrence of the event based on the steering angle command signal. When a sudden steering occurs in the movable body, it is possible to obtain the image information, the measurement information, and the position information at that time and the cause of the sudden steering can be easily analyzed.

The time-series measurement information may include a fluctuation angle information indicating the time-series change of the fluctuation angle of the movable body, and the event analyzer may extract that the weather is stormy at the time and position corresponding to the fluctuation angle based on the fluctuation angle information. Since the image information, the measurement information, and the position information in the stormy weather can be grasped, for example, safety measures can be planned when the movable body moves in the stormy weather.

The time-series measurement information may include a target position relation information showing the relative position relation between the movable body and the target around the movable body, and the event analyzer may extract the approach of the target to the movable body based on the target position relation information. Since the image information, the measurement information and the position information when another movable body approaches can be grasped, for example, the cause of the approach can be easily analyzed later.

When the position indicated by the acquired position information is a specific position, the position information acquisition module may change the period (time period) of information acquisition constituting at least one of the image information, the measurement information, and the position information. For example, when the movable body is moving around a port with many obstacles, the period of information acquisition constituting at least one of the image information, the measurement information, and the position information can be shortened, so that the moving state of the movable body can be analyzed in more detail. For example, when the movable body is moving in an ocean with few obstacles, the period of acquisition can be lengthened, so that the storage capacity of the storage module for storing various kinds of information can be saved.

The image display processing system of the present invention may include a display processing module and a management server arranged outside the movable body having an image processed by the image display module, and may also include a communication module. The communication module transmits the image information, the position information, and the measurement information to the management server, and receives an image display data processed by the display processing module of the management server.

With such a configuration, it is possible to view not only the present images but also the past images and the related information smoothly without communicating with the vessel by browsing the data accumulated on the management server located outside the vessel or on the land.

The image display processing method acquires the image information of the time-series in which the image shot on the movable body is associated with the shot time of the image and acquires the position information of the time-series in which the position of the movable body is associated with the positioning time of the position. The occurrence of the event related to the movable body is extracted based on either the image information or the position information, the specific time of the event is specified, and a plurality of image information corresponding to the event is selected based on the specific time of the event from the image information of the time-series. A plurality of the position information corresponding to the event is selected based on the specific time of the event from the position information of the time-series, and display processing is performed to display the selected image information corresponding to the event and the position information corresponding to the event in association with the specific time of the event.

The image display processing method acquires the measurement information of the time-series in which the measurement result measured by the sensor mounted on the movable body is associated with the time of the measurement, selects the measurement information corresponding to the specific time, and displays the measurement result in association with the image and the position information.

### EFFECT(S) OF THE INVENTION

According to the present invention, it is possible to easily analyze an information concerning a movable body that is of high interest to a user.

### BRIEF DESCRIPTION OF THE DRAWINGS

Figure 1 shows a configuration of a first embodiment of an image display processing system of the present invention.
Figure 2 shows a part of a configuration including an image information acquiring equipment of the first embodiment of the image display processing system of the present invention.
Figure 3 shows a part of a configuration of a management server including a display processing part of the first embodiment of the image display processing system of the present invention.
Figure 4 shows a configuration of a second embodiment of the image display processing system of the present invention.
Figure 5 shows a part of a configuration including the image information acquiring equipment of the second embodiment of the image display processing system of the present invention.
Figure 6 shows a part of a configuration of the management server including the display processing module of the second embodiment of the image display processing system of the present invention.
Figure 7 conceptually shows an example of association processing in the management server according to the second embodiment of the image display processing system of the present invention.
Figure 8 conceptually shows another example of mapping processing in the management server according to the second embodiment of the image display processing system of the present invention.
Figure 9 shows an example of a list screen information created by the management server according to the second embodiment of the image display processing system of the present invention.
Figure 10 conceptually shows an example of a display processing by the management server according to the second embodiment of the image display processing system of the present invention.
Figure 11 conceptually shows another example of the display processing by the management server according to the second embodiment of the image display processing system of the present invention.
Figure 12 shows an example of an event extraction screen information created by the management server according to the second embodiment of the image display processing system of the present invention.
Figure 13 is a flowchart defining an operation procedure of information transmission processing according to the second embodiment of the image display processing system of the present invention.
Figure 14 is a flowchart defining an operation procedure of event extraction processing according to the second embodiment of the image display processing system of the present invention.
Figure 15 is a flowchart defining an operation procedure of the display processing by a management server according to the second embodiment of the image display processing system of the present invention.
Figure 16 shows an example of an information processing sequence according to the second embodiment of the image display processing system of the present invention.
Figure 17 conceptually shows an embodiment according to a modification of the image display processing system of the present invention.

### DETAILED DESCRIPTION OF THE INVENTION

Hereinafter, an embodiment of the present invention will be described with reference to the drawings. The same reference numerals are assigned to the corresponding portions in the drawings, and the description is not repeated. At least some of the embodiments described below may be optionally combined.

### < Configuration and Basic Operation >

### [Display System]

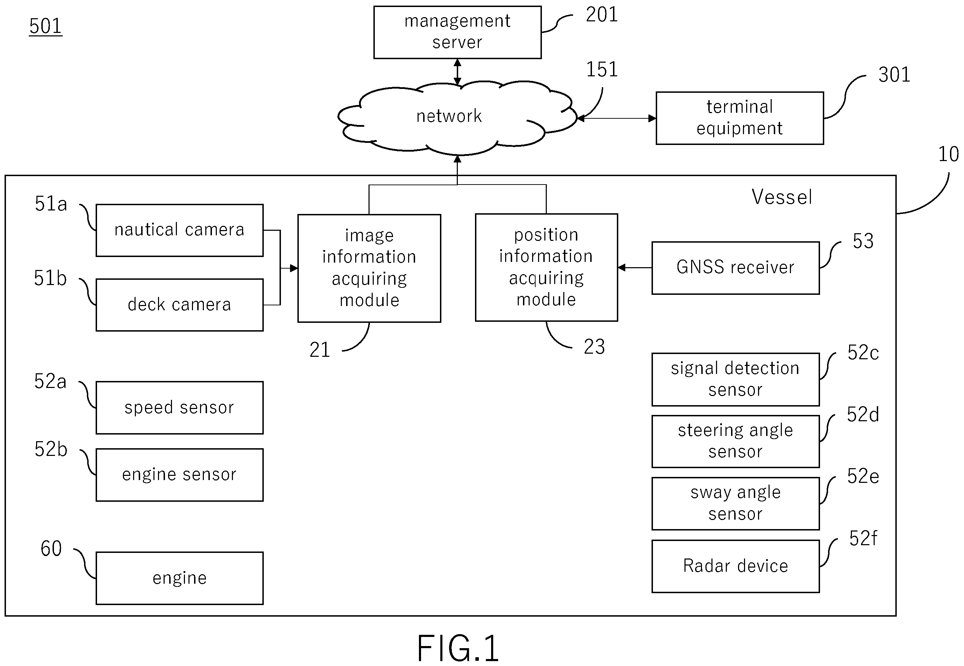

Figure 1 shows a configuration of a first embodiment of the image display processing system of the present invention. Referring to Figure 1, a display system (501) includes an information acquiring equipment (101), a management server (201), and a terminal equipment (301). The information acquiring equipment (101) and the management server (201) can transmit and receive information via an external network (151) such as the Internet, for example. The information acquiring equipment (101) is mounted on a vessel (10). The vessel (10) is an example of a movable body. The management server (201) is an example of a display processing apparatus.

The management server (201) and the terminal equipment (301) are used, for example, by an operator who manages an operation of the vessel (10) (water-surface or underwater movable body) or by an individual (hereinafter, collectively referred to as a user). The terminal equipment (301) is, for example, a notebook PC (personal computer). The terminal equipment (301) exchanges various kinds of information with the management server (201) via, for example, the external network (151). The terminal equipment (301) is not limited to a notebook PC and maybe a communication terminal equipment such as a tablet.

### [Information Acquiring Module]

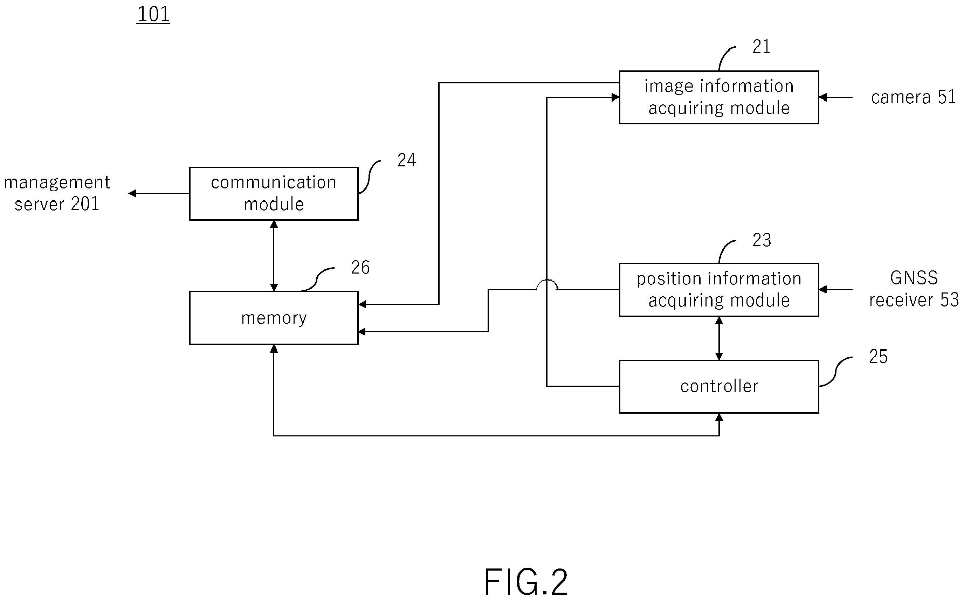

Figure 2 is a block diagram showing an example of a configuration of the information acquiring equipment according to the first embodiment of the present invention. Referring to Figure 2, the information acquiring equipment (101) is provided with a communication module (24), a controller (25), and a memory (26).

The information acquiring equipment (101) is provided with an image information acquiring module (21) and a position information acquiring module (23). Some or all of the image information acquiring module (21), the position information acquiring module (23), the communication module (24), and the controller (25) are implemented, for example, by a processing circuit which includes a plurality of processors. The memory (26) is, for example, a nonvolatile memory included in the processing circuit.

Referring to Figures 1 and 2, the image information acquiring module (21) acquires image information in a time-series in which an image taken on the vessel (10) is associated with a shot time of the image.

More specifically, the vessel (10) is equipped with cameras (51a) and (51b) that are camera (51). The camera (51) periodically shoots images of a predetermined area. The camera (51) is connected to the information acquiring equipment (101) via a network (hereinafter also referred to as an "Inboard Network") on, for example, the vessel (10). The image captured by the camera (51) may be a still image or an image constituting a moving image.

Here, the camera (51a) is, for example, a nautical camera that captures the surroundings of the vessel (10) during its voyage. The camera (51b) is, for example, a camera that captures the deck of the vessel (10). Hereinafter, the camera (51a) is also referred to as a "nautical camera (51a)" and the camera (51b) is also referred to as a "deck camera (51b)".

For example, the navigation shooting camera (51a) transmits image information (hereinafter also referred to as "navigation image information"), including a shot image (hereinafter also referred to as a "nautical images"), the shot time of the navigation image, and its own ID (identifier), to the information acquiring equipment (101) via the onboard network. For example, the navigation shooting camera (51a) periodically transmits navigation image information to the information acquiring equipment (101). That is, the navigation shooting camera (51a) transmits time-series navigation image information to the information acquiring equipment (101).

For example, the deck shooting camera (51b) transmits image information (hereinafter also referred to as a "deck image information") including the shot image (hereinafter also referred to as a "deck image"), the shot time of the deck image, and its own ID to the information acquiring equipment (101) via the onboard network. For example, the deck shooting camera (51b) periodically transmits deck image information to the information acquiring equipment (101). That is, the deck shooting camera (51b) transmits a time-series deck image information to the information acquiring equipment (101).

When the image information acquiring module (21) in the information acquiring equipment (101) receives the navigation image information from the navigation shooting camera (51a), the received navigation image information is stored in the memory (26).

When the image information acquiring module (21) receives the deck image information from the deck shooting camera (51b), the received deck image information is stored in the memory (26).

The camera (51) is not limited to the configuration of transmitting the image information to the information acquiring equipment (101) via the onboard network and may be configured to write the image information to a memory card or a recording medium such as USB (Universal Serial Bus) (registered trademark), for example. In this case, the image information-acquiring equipment (21) may acquire the image information from the recording medium.

The camera (51) may be configured to transmit information including the shot image and the ID and not including the shot time to the information acquiring equipment (101). In this case, the image information acquiring module (21) acquires image information by associating the time at which the information is received with the image included in the information received from the camera (51). The shot time in the case of a moving image may be, for example, the start time or the end time of the moving image. It may be any time during the shooting of the moving image.

The position information acquisition module (23) acquires a position information of a time-series in which a position of the vessel (10) is associated with the time (hereinafter also referred to as a "position measurement time") at which the position is measured.

More specifically, the vessel (10) is equipped with, for example, a GNSS (Global Navigation Satellite Systems) receiver (53). The GNSS receiver (53) periodically receives, for example, GNSS signals from a plurality of satellites, and extracts the position of the vessel (10) based on the received GNSS signals. The position of the vessel (10) is indicated, for example, by a latitude and a longitude.

The GNSS receiver (53) periodically creates position information including an extraction result, the position measurement time, and its own ID, for example, and transmits it to the information acquiring equipment (101). That is, the GNSS receiver (53) transmits the position information of the time-series to the information acquiring equipment (101).

Upon receiving the position information from the GNSS receiver (53), the position information acquisition module (23) in the information acquiring equipment (101) stores the received position information in the memory (26) and outputs a notification indicating that the position information has been received by the controller (25).

The GNSS receiver (53) may be configured to transmit information, including the extraction result, the ID, and not including the position measurement time, to the information acquiring equipment (101). In this case, the position information acquiring module (23) acquires the position information by associating the time at which the information is received with the measurement result included in the information received from the GNSS receiver (53).

The communication module (24) communicates with the management server (201) via the external network (151) by conducting radio communication with a device such as a radio base station (not shown) in accordance with a communication system such as Wi-Fi (registered trademark), LTE (registered trademark), or 5G for a satellite link. The communication module (24) is not limited to a configuration in which it communicates with the management server (201) via the radio base station and the external network (151), but may also be configured in which it communicates with the management server (201) via a wired line.

The communication module (24) performs transmission processing for transmitting image information acquired by the image information acquiring equipment (21) and the position information acquired by the position information acquiring equipment (23) to the management server (201).

More specifically, the memory (26) stores an ID (hereinafter also referred to as a "vessel ID") of the vessel (10) on which its information acquiring equipment (101) is mounted.

For example, the communication module (24) periodically acquires at least one of image information, measurement information, and position information from the memory (26), creates a vessel information group including the acquired information and the vessel ID, and transmits it to the management server (201). For example, the communication module (24) creates a vessel information group and transmits it to the management server (201) every certain time after starting its own information acquiring equipment (101). That is, the communication module (24) transmits the vessel information group, including various information in a time-series accumulated in the memory (26) for a predetermined time and the vessel ID, to the management server (201).

When the position indicated by the acquired position information is a specific position, the information acquiring equipment (101) performs period-changing processing for changing the acquisition period of information constituting at least one of image information, measurement information and position information.

More specifically, when the acquired position information indicates a position around a predetermined port, for example, the information acquiring equipment (101) makes the acquisition period shorter than the acquisition period when the acquired position information indicates a position in a sea area. Here, the information acquiring equipment (101) changes each acquisition period of image information, measurement information, and position information as a period changing process, for example.

Specifically, the memory (26) stores port information indicating the position of the port where the vessel (10) docks, for example. The position of the port is indicated by latitude and longitude, for example.

When the controller (25) receives the notification indicating that position information has been received from the position information acquisition module (23), the controller (25) reads the position information and the port information in the time-series stored in the memory (26). The controller (25) then calculates the distance between the position of the vessel (10) and the position of the port indicated by the port information for each position measurement time indicated by the position information and checks whether the calculated distance is less than a predetermined threshold.

For example, when at least one of the plurality of calculated distances is less than the threshold, the controller (25) outputs to the image information acquiring equipment (21) and the position information acquiring equipment (23) an instruction to change the period to shorten the acquisition period of the image information, the measurement information, and the position information.

When the image information acquiring equipment (21) and the position information acquiring equipment (23) receive the period change instruction from the controller (25), they shorten the acquisition period of the image information, the measurement information, and the position information in accordance with the period change instruction. On the other hand, the controller (25) does not perform the period change processing when all of the calculated distances are equal to or greater than the threshold value.

It should be noted that, for example, after outputting a cycle change instruction to shorten the acquisition cycles, the controller (25) may output an instruction to return the acquisition cycles to their original values to the image information acquiring module (21) and the position information acquiring module (23) if the position information of the time-series acquired by the position information acquiring module (23) includes the position of the vessel (10) whose distance from the port position is equal to or greater than the threshold value.

### [Management server]

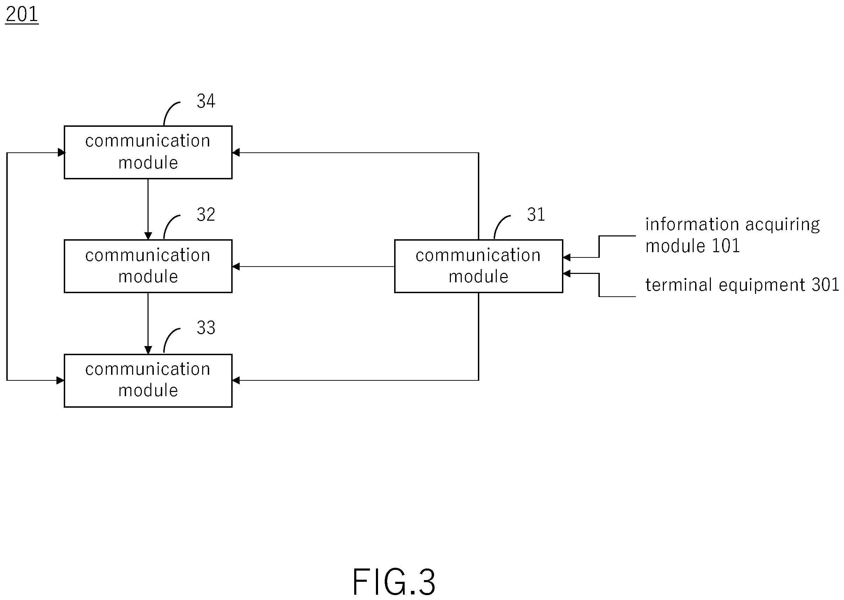

Figure 3 is a diagram showing an example of a configuration of the management server (201) according to the first embodiment of the present invention. Referring to Figure 3, the management server (201) includes a communication module (31), an event analyzer (32), a display processing module (33), and a memory (34). Some or all of the communication module (31), the event analyzer (32), and the display processing module (33) are implemented by a processing circuit including, for example, processors. The memory (34) is, for example, a nonvolatile memory included in the processing circuit.

The communication module (31) receives the vessel information group from the information acquiring equipment (101) via the external network (151). When the communication module (31) receives the vessel information group from the information acquiring equipment (101), it stores the received vessel information group in the memory (34) and confirms the type of each information included in the vessel information group.

The memory (34) stores a type table indicating the correspondence between the ID of the camera (51) and the sensor (52) of the GNSS receiver (53) and the information received from the information acquiring equipment (101).

After that, the communication module (31) reads the type table stored in the memory (34). Then, by referring to the type table, the communication module (31) specifies the type of information included in the vessel information group which corresponds to the ID of the GNSS receiver (53) by the camera (51) and the sensor (52).

Then, the communication module (31) outputs a notification (hereinafter also referred to as a "receiving notification") indicating that the vessel information group including the specified type of information has been received by the event analyzer (32).

For example, the management server (201) performs an event extraction processing for extracting the occurrence of an event related to the vessel (10) based on at least one of the image information, the measurement information, and the position information received from the information acquiring equipment (101).

More specifically, when the event analyzer (32) receives a reception notification from the communication module (31), it performs the event extraction processing based on the vessel information group stored in the memory (34).

The events related to the vessel (10) are the entry of the vessel (10), the departure of the vessel (10), etc.

### [The entry and departure of the vessel]

The event analyzer (32) extracts the entry of the vessel (10) into a specific port and the departure of the vessel (10) from that port as an event based on the position information or the position information and the speed information received from the information acquiring equipment (101).

More specifically, for example, when the event analyzer (32) receives the reception notification from the communication module (31) indicating that the vessel information group including the position information and the speed information has been received, the entry of the vessel (10) into the specific port and the departure of the vessel (10) from that port are determined.

Specifically, the event analyzer (32) calculates the distance between the position of the vessel (10) indicated by the position information and the specific port based on the position information received from the information acquiring equipment (101).

The event analyzer (32) extracts the entry of the vessel (10) into the specific port as an event when the calculated distance is less than or equal to a predetermined distance threshold and the position of the vessel (10) corresponding to the calculated distance and a speed (hereinafter also referred to as a "corresponding speed") at the sensor measurement time corresponding to a measured position measurement time (hereinafter also referred to as a "target positioning time") are equal to or greater than a predetermined speed threshold.

The memory (34) stores a management table indicating a correspondence relation between the vessel and the vessel ID, the vessel name of the vessel (10) and the port where the vessel (10) docks.

When the event analyzer (32) receives the reception notification indicating that the vessel information group including the position information and the speed information has been received from the communication part (31), it reads the vessel information group and the management table stored in the memory (34). The event analyzer (32) specifies the vessel name and the port corresponding to the vessel ID included in the vessel information group by referring to the management table.

The memory (34) further stores the port information indicating the position of the port where the vessel (10) docks.

When the event analyzer (32) specifies the port corresponding to the vessel ID, it reads the port information in the memory (34). Then, the event analyzer (32) confirms the position of the specified port by referring to the port information.

When the position of the port is confirmed, the event analyzer (32) calculates the distance between the position of the vessel (10) and the confirmed port position for each position measurement time in the position information of the time-series included in the vessel information group.

When one of the calculated distances is equal to or less than the distance threshold, the event analyzer (32) confirms the target positioning time in the position information of the time-series. Then, the event analyzer (32) performs a correspondence processing for specifying the shot time corresponding to the confirmed target positioning time in the time-series speed information stored in the memory (34). The speed information is not limited to the measurement by the sensor described later and may be calculated based on the position information and the time information.

The mapping processing, display processing, and the like in the management server according to the first embodiment of the present invention will be described in detail in the description of a second embodiment, which further includes a sensor information acquiring module in the first embodiment.

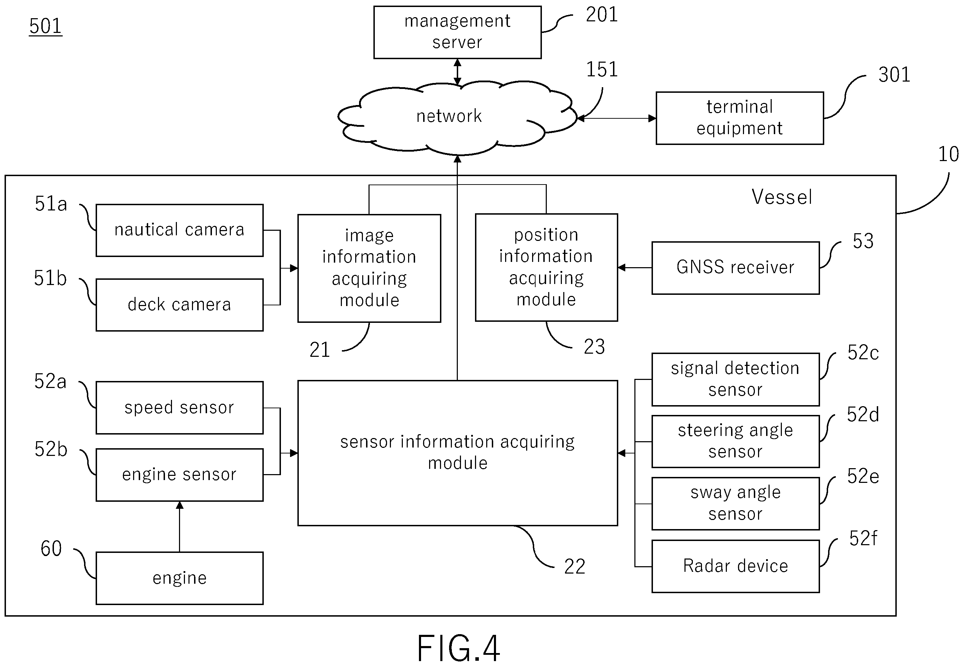

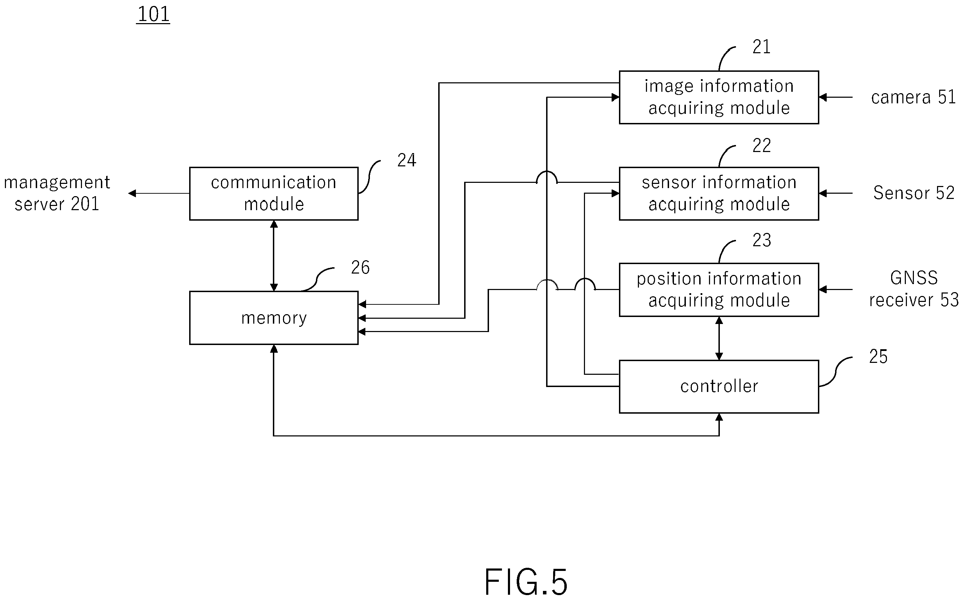

Next, the second embodiment of the present invention will be described with reference to Figure 4 and the following. Figure 4 shows a configuration of the image display processing system and Figure 5 shows a configuration of the information acquiring equipment according to the second embodiment of the present invention.

Referring to Figure 5, the information acquiring equipment (101) includes the image information acquiring module (21), the sensor information acquiring module (22), the position information acquiring module (23), the communication module (24), the controller (25), and the memory (26). Some or all of the image information acquiring module (21), the sensor information acquiring module (22), the position information acquiring module (23), the communication module (24), and the controller (25) are implemented by a processing circuit including, for example, processors. The memory (26) is, for example, a nonvolatile memory included in the processing circuit. The second embodiment differs from the first embodiment in that it includes the sensor information acquiring module (22).

The image information acquiring module (21) acquires image information in a time-series in which the image taken on the vessel (10) is associated with the shot time of the image. The specific configuration and functions are already the same as those of the first embodiment, and since they have been described, they will be omitted here.

The sensor information acquiring module (22) acquires a time-series measurement information corresponding to the measurement result by the sensor (52) mounted on the vessel (10) and a measurement time (hereinafter also referred to as a "sensor measurement time") of the sensor (52). More specifically, the vessel (10) is equipped with the sensors (52a), (52b), (52c), (52d), (52e), (52f), which are the sensor (52). Each sensor (52) is connected to the information acquiring equipment (101), for example, via the network. Each sensor (52) creates measurement information including, for example, a measurement result, a sensor measurement time, and its own ID, and transmits it to the information acquiring equipment (101).

The sensor (52) is a speed sensor, an engine sensor, a rudder angle sensor, a sway angle sensor, a sound sensor, a water temperature sensor, a depth sensor, a signal extraction sensor, a radar device, and the like. Here, the sensor (52a), the sensor (52b), the sensor (52c), the sensor (52d), the sensor (52e), and the sensor (52f) are a speed sensor, an engine sensor, a signal extraction sensor, a steering angle sensor, a sway angle sensor, and a radar device, respectively. Hereinafter, the sensor (52a), the sensor (52b), the sensor (52c), the sensor (52d), the sensor (52e), and the sensor (52f) are also referred to as a speed sensor (52a), an engine sensor (52b), a signal extraction sensor (52c), a steering angle sensor (52d), a sway angle sensor (52e), and a radar device (52f), respectively.

The speed sensor (52a) measures the speed of the vessel (10), for example, periodically. The speed sensor (52a) periodically transmits speed information including the measured speed, the sensor measurement time, and its own ID to the information acquiring equipment (101), for example. That is, the speed sensor (52a) transmits a time-series measurement information (hereinafter also referred to as a "time-series speed information") indicating the time-series change of the speed of the vessel (10) to the information acquiring equipment (101).

The engine sensor (52b) periodically measures, for example, the rotational speed (hereinafter also referred to as an "engine speed") of an engine (60) mounted on the vessel (10). The engine sensor (52b) periodically transmits, for example, rotational speed information including the measured rotational speed, the sensor measurement time, and its own ID to the information acquiring equipment (101). That is, the engine sensor (52b) transmits time-series measurement information (hereinafter also referred to as a "time-series rotation speed information") indicating the time-series change of the engine rotational speed to the information acquiring equipment (101). The engine (60) is an example of a prime mover.

The signal extraction sensor (52c) periodically extracts, for example, a command signal to the engine (60). More specifically, the vessel (10) is equipped with, for example, an engine telegraph (not shown) for controlling the output of the engine (60). The engine telegraph is, for example, a device that receives an instruction on the engine speed of the vessel (10) from the operator of the vessel (10) and outputs a speed instruction signal indicating the command value (hereinafter also referred to as "command speed") of the engine speed, which is the content of the operator's instruction, to the engine (60).

The signal extraction sensor (52c) extracts the command speed indicated by the speed instruction signal by monitoring the speed instruction signal output from the engine telegraph. The signal extraction sensor (52c) periodically transmits the speed instruction information including, for example, the extracted command speed, the sensor measurement time, and its own ID to the information acquiring equipment (101). That is, the signal extraction sensor (52c) transmits the time-series measurement information (hereinafter also referred to as a "time-series rotational speed command information") indicating the time-series change of the speed instruction signal to the engine (60) to the information acquiring equipment (101).

The signal extraction sensor (52c), for example, periodically extracts the instruction signal to the rudder (not shown) of the vessel (10). More specifically, the vessel (10) is equipped with a rudder control device (not shown) for controlling the rudder angle during automatic navigation, for example. The rudder control device is, for example, a device that receives an instruction on the rudder angle from the operator of the vessel (10) and outputs a rudder angle command signal indicating the command value (hereinafter also referred to as a "command steering angle") of the rudder angle as the content of the operator's instruction to the rudder.

The signal extraction sensor (52c) extracts a command rudder angle indicated by the rudder angle command signal by monitoring the rudder angle command signal output from the rudder control device. The signal extraction sensor (52c) periodically transmits the rudder angle command information including the extracted command rudder angle, the sensor measurement time, and its own ID to the information acquiring equipment (101), for example. That is, the signal extraction sensor (52c) transmits the time-series measurement information (hereinafter also referred to as a "steering angle command information in time-series") indicating the time-series change of the rudder angle command signal for the rudder of the vessel (10) to the information acquiring equipment (101).

The rudder angle sensor (52d) measures the rudder angle of the rudder of the vessel (10) periodically, for example. The rudder angle sensor (52d) periodically transmits rudder angle information including the measured rudder angle, the sensor measurement time, and its own ID to the information acquiring equipment (101), for example. That is, the rudder angle sensor (52d) transmits time-series measurement information (hereinafter also referred to as a "steering angle information in time-series") indicating the time-series change of the rudder angle of the vessel (10) to the information acquiring equipment (101).

The sway angle sensor (52e) measures the sway angle of the vessel (10) periodically, for example. The sway angle sensor (52e) periodically transmits a sway angle information including a measured sway angle, the sensor measurement time, and its own ID to the information acquiring equipment (101), for example. That is, the sway angle sensor (52e) transmits time-series measurement information (hereinafter also referred to as a "time-series fluctuation angle information") indicating the time-series change of the sway angle of the vessel (10) to the information acquiring equipment (101).

The radar device (52f), for example, periodically measures the distance between the vessel (10) and another vessel. The radar device (52f), for example, periodically transmits distance information including the measured distance, the sensor measurement time, and its own ID to the information acquiring equipment (101). That is, the radar device (52f) transmits a time-series measurement information (hereinafter also referred to as a "distance information in time-series") indicating the time-series change of the distance between the vessel (10) and the another vessel to the information acquiring equipment (101).

When the sensor information acquiring module (22) in the information acquiring equipment (101) receives the time-series measurement information from at least one of the plurality of sensors (52), the received measurement information is stored in the memory (26).

The sensor (52) may be configured to transmit information including the measurement result and the ID and not including the sensor measurement time to the information acquiring equipment (101). In this case, the sensor information acquiring module (22) acquires measurement information by associating the time at which the information is received with the measurement result included in the information received from the sensor (52).

Since the position information acquiring module (23) has the same structure as the first embodiment described above, the description thereof will be omitted. When the position indicated by the acquired position information is a specific position, the information acquiring equipment (101) performs period-changing processing for changing the acquisition period of information constituting one of image information, measurement information, and position information.

More specifically, when the acquired position information indicates a position around a predetermined port, for example, the information acquiring equipment (101) makes the acquisition period shorter than the acquisition period when the acquired position information indicates a position in a sea area. Here, the information acquiring equipment (101) changes each acquisition period of image information, measurement information and position information as a period changing process, for example.

Specifically, the memory (26) stores port information indicating the position of the port where the vessel (10) docks, for example. The position of the port is indicated by latitude and longitude, for example.

When the controller (25) receives a notification indicating that position information has been received from the position information acquisition module (23), the controller (25) reads the position information and the port information in the time-series stored in the memory (26). The controller (25) then calculates the distance between the position of the vessel (10) and the position of the port indicated by the port information for each position measurement time indicated by the position information, and checks whether the calculated distance is less than a predetermined threshold.

For example, when at least one of the plurality of calculated distances is less than the threshold, the controller (25) outputs to the image information acquiring module (21), the sensor information acquiring module (22), and the position information acquiring module (23) an instruction to change the period to shorten the acquisition period of the image information, the measurement information, and the position information.

When the image information acquiring module (21), the sensor information acquiring module (22), and the position information acquiring module (23) receive the period change instruction from the controller (25), they shorten the acquisition period of the image information, the measurement information, and the position information in accordance with the period change instruction. On the other hand, the controller (25) does not perform the period change processing when all of the calculated distances are equal to or greater than the threshold value.

For example, after outputting the period change instruction to shorten each acquisition period, the controller (25) may output the instruction to return each acquisition period to its original value to the image information acquiring module (21), the sensor information acquiring module (22), and the position information acquiring module (23) when the position information of the time-series acquired by the position information acquiring module (23) includes the position of the vessel (10) whose distance from the port position is equal to or greater than the threshold value.

### [Management server]

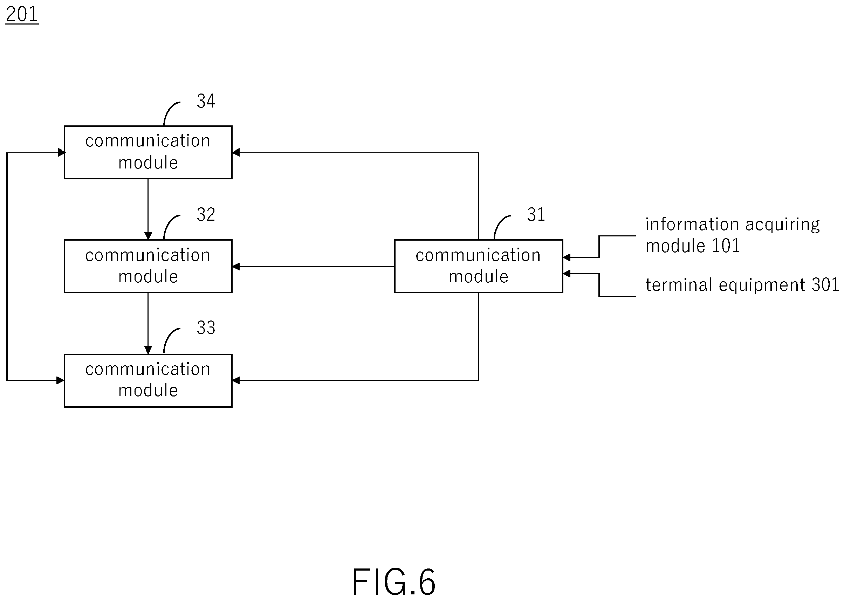

Figure 6 is a diagram showing a configuration of a management server according to the second embodiment of the present invention. Although the configuration is basically the same as that of the first embodiment, the event analyzer (32) further includes a function of analyzing and extracting events based on measurement information acquired by the sensor information acquiring module (22).

The memory (34) stores a type table indicating the correspondence between the ID of the camera (51) and the sensor (52) of the GNSS receiver (53) and the information received from the information acquiring equipment (101).

When the communication module (31) receives the vessel information group from the information acquiring equipment (101), it reads the type table stored in the memory (34). By referring to the type table, the communication module (31) specifies the type of information included in the vessel information group that the camera (51) and the sensor (52) correspond to the ID of the GNSS receiver (53). The communication module (31) outputs a notification (hereinafter also referred to as "receiving notification") indicating that the vessel information group including the specified type of information has been received by the event analyzer (32).

The event analyzer (32) of the management server (201) performs the event extraction processing for extracting the occurrence of an event related to the vessel (10) based on the image information, the measurement information, and the position information received from the information acquiring equipment (101). More specifically, when the event analyzer (32) receives the reception notification from the communication module (31), it performs the event extraction processing based on the vessel information group stored in the memory (34). The events related to the vessel (10) include the entry of the vessel (10), the departure of the vessel (10), the rapid speed of the engine speed, the rapid deceleration of the engine speed, the rapid rudder of the vessel (10), the occurrence of stormy weather at the position of the vessel (10), the execution of prescribed work at the vessel (10), and the approach of another vessel.

### [The entry and departure of the vessel]

Based on the position information and the speed information received from the information acquiring equipment (101), the event analyzer (32) extracts, as an event, the entry of the vessel (10) into the specific port and the exit of the vessel (10) from that port.

More specifically, for example, when the event analyzer (32) receives the reception notification from the communication module (31) indicating that the vessel information group including the position information and the speed information has been received, the entry of the vessel (10) into the specific port and the departure of the vessel (10) from that port are determined.

Specifically, the event analyzer (32) calculates the distance between the position of the vessel (10) indicated by the position information and the specific port based on the position information received from the information acquiring equipment (101).

The event analyzer (32) extracts the entry of the vessel (10) into the specific port as an event, in the case that the calculated distance is less than or equal to the predetermined distance threshold, and also the speed (hereinafter also referred to as a "corresponding speed") at the sensor measurement time when the position of the vessel (10) corresponding to the calculated distance corresponds to the measured position measurement time (hereinafter also referred to as "target position time") is equal to or greater than the predetermined speed threshold. The memory (34) stores a management table indicating the correspondence relation between the vessel ID, the vessel name of the vessel (10) and the port where the vessel (10) docks.

When the event analyzer (32) receives the reception notification indicating that the vessel information group including the position information and the speed information has been received from the communication module (31), it reads the vessel information group and the management table stored in the memory (34). The event analyzer (32) then specifies the vessel name and the port corresponding to the vessel ID included in the vessel information group by referring to the management table. The memory (34) further stores the port information indicating the location of the port where the vessel (10) docks.

When the event analyzer (32) specifies the port corresponding to the vessel ID, it reads the port information in the memory (34). Then, the event analyzer (32) confirms the position of the specified port by referring to the port information.

When the position of the port is confirmed, the event analyzer (32) calculates the distance between the position of the vessel (10) and the confirmed position of the port for each position measurement time in the position information of the time-series included in the vessel information group.

When one of the plurality of calculated distances is equal to or less than the distance threshold, the event analyzer (32) confirms the target positioning time in the position information of the time-series. Then, the event analyzer (32) performs a correspondence processing for specifying the sensor measurement time corresponding to the confirmed target positioning time in the time-series speed information stored in the memory (34).

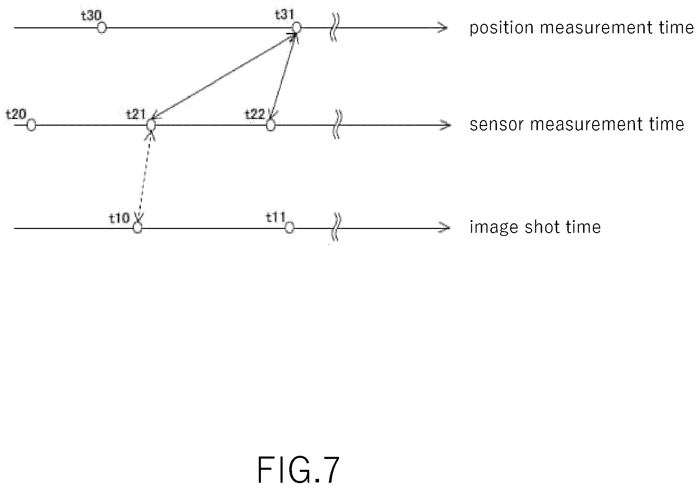

Figure 7 is a diagram conceptually showing an example of correspondence processing in the management server according to an embodiment of the present invention.

Referring to Figure 7, when the event analyzer (32) confirms the target positioning time, it reads the time-series speed information stored in the memory (34). The event analyzer (32) specifies, among the plurality of sensor measurement times indicated by the time-series speed information, the sensor measurement time after the position measurement time immediately before the target positioning time and before the target positioning time as the sensor measurement time corresponding to the target positioning time.

For example, when the target positioning time is the time t31, the sensor measurement time corresponding to the target positioning time t31 is the time t21, t22 which is the time after the position measurement time t30 but before the target positioning time t31.

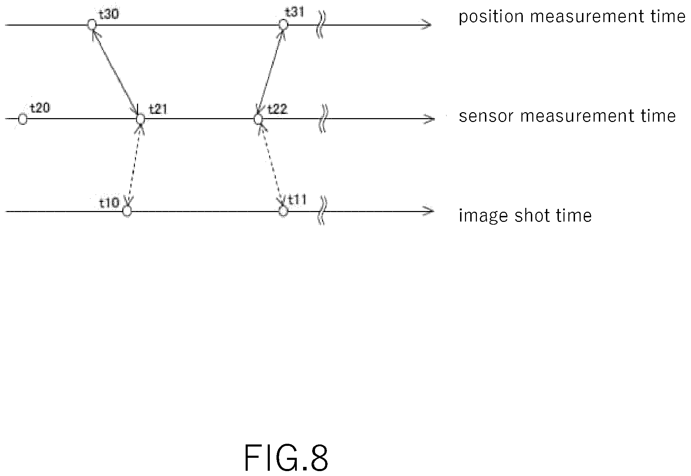

Figure 8 is a conceptual diagram showing another example of correspondence processing in the management server according to the embodiment of the present invention.

Referring to Figure 8, the event analyzer (32) may specify the sensor measurement time closest to the target positioning time as the sensor measurement time corresponding to the target positioning time among the plurality of sensor measurement times indicated by the time-series speed information.

For example, when the target positioning time is time t30, the sensor measurement time corresponding to the target positioning time t30 is time t21. When the target positioning time is time t31, the sensor measurement time corresponding to the target positioning time t31 is time t22. The shot time shown in Figures 7 and 8 will be described later.

Referring again to Figure 3, when the event analyzer (32) specifies the sensor measurement time corresponding to the target positioning time, it checks whether the corresponding speed at the specified sensor measurement time is equal to or greater than the speed threshold.

When the corresponding speed is equal to or greater than the speed threshold, the event analyzer (32) determines that the vessel (10) has entered the port at the specified sensor measurement time. In this case, for example, the event analyzer (32) determines that the specified sensor measurement time is an event specific time. Then, the event analyzer (32) creates the occurrence of the entry of the vessel (10) with the specified vessel name, the extraction result indicating the port entered, and the entry information including the event specific time, and outputs the information to the display processing module (33) as the event occurrence information.

On the other hand, the event analyzer (32) extracts the departure of the vessel (10) from the port as an event when the distance calculated after extracting the landing of the vessel (10) at the port is greater than the distance threshold and the corresponding speed is greater than or equal to the speed threshold.

More specifically, the event analyzer (32) confirms the position of the port using the port information and then confirms whether or not the position information in the time-series of the vessel information group includes the same position as that of the port. If the position information in the time-series includes the same position as that of the port, the event analyzer (32) extracts the berthing of the vessel (10) to the port.

When the event analyzer (32) extracts the berthing of the vessel (10) to the port, it calculates the distance between the position of the vessel (10) and the position of the port for each position measurement time after the position measurement time in which the port position is measured among a plurality of position measurement times included in the position information in the time-series.

When one of the calculated distances is greater than the distance threshold, the event analyzer (32) checks whether the corresponding speed is greater than or equal to the speed threshold in the speed information of the time-series stored in the memory (34). If the corresponding speed is greater than or equal to the speed threshold, the event analyzer (32) determines that the vessel (10) has left port at the sensor measurement time when the corresponding speed is measured. In this case, the event analyzer (32) determines that the sensor measurement time is the event specific time.

Then, the event analyzer (32) creates the occurrence of the departure of the vessel (10) with the specified vessel name, the extraction result indicating the port from which the vessel left and the departure information including the event specific time, and outputs it as the event occurrence information to the display processing module (33).

When one of the calculated distances is less than or equal to the distance threshold, the event analyzer (32) may extract the entry of the vessel (10) as the event regardless of whether the corresponding speed is greater than or equal to the speed threshold. When at least one of the calculated distances is greater than the distance threshold, the event analyzer (32) may extract the exit of the vessel (10) as the event regardless of whether the corresponding speed is greater than or equal to the speed threshold.

When the calculated distance is less than or equal to the predetermined distance threshold and the engine speed at the sensor measurement time corresponding to the target positioning time is greater than or equal to the predetermined speed threshold, the event analyzer (32) may extract the entry of the vessel (10) into a specific port as the event. When the calculated distance after extracting the landing of the vessel (10) into a port is greater than the distance threshold and the engine speed is greater than or equal to the speed threshold, the event analyzer (32) may extract the departure of the vessel (10) from the port as the event.

### [Rapid increasing or deceleration of the engine speed]

### < Example 1>

For example, the event analyzer (32) extracts the occurrence of the sudden deceleration in the rapid speed of the engine speed based on the time-series change of the engine speed indicated by the time-series speed information.

More specifically, for example, when the event analyzer (32) receives the reception notification from the communication module (31) indicating that the vessel information group including the time-series speed information has been received, the rapid speed of the engine speed determines whether the sudden deceleration of the engine speed has occurred.

Specifically, when the event analyzer (32) receives the reception notification indicating that the vessel information group including the time-series speed information has been received, it reads the vessel information group and the management table stored in the memory (34). The event analyzer (32) then specifies the vessel name corresponding to the vessel ID included in the vessel information group by referring to the management table.

The event analyzer (32) calculates, for example, the amount of change in the engine speed per minute at a certain sensor measurement time based on the time-series change in the engine speed indicated by the time-series speed information.

When the event analyzer (32) calculates the amount of change, it determines whether or not a rapid increase in the engine speed has occurred as an event. Specifically, the event analyzer (32) checks whether or not the calculated amount of change is greater than the first speed threshold.

When the calculated amount of change in engine speed is greater than the first speed threshold, the event analyzer (32) extracts the occurrence of the rapid increase in engine speed. In this case, for example, the event analyzer (32) determines that the sensor measurement time corresponding to the calculated amount of change is the event specific time. Then, the event analyzer (32) creates surge speed information including the extraction result indicating the occurrence of the surge speed of the engine speed in the vessel (10) of the specified vessel name and the event specific time and outputs it as event occurrence information to the display processing module (33).

On the other hand, when the calculated amount of change is less than the first speed threshold, the event analyzer (32) determines whether or not the sudden deceleration of the engine speed has occurred as the event. More specifically, the event analyzer (32) checks whether or not the calculated amount of change is less than a predetermined threshold (hereinafter also referred to as a "second speed threshold"). For example, the second speed threshold is less than the first speed threshold.

When the calculated amount of change is less than the second speed threshold, the event analyzer (32) extracts the occurrence of the sudden deceleration of the engine speed as an event. Then, the event analyzer (32) creates the sudden deceleration information including the extraction result indicating the occurrence of sudden deceleration of the engine speed on the specified vessel name vessel (10) and the event specific time, and outputs the sudden deceleration information to the display processing module (33) as the event occurrence information.

On the other hand, the event analyzer (32) determines that the sudden deceleration of the engine speed has not occurred when the calculated change amount is equal to or greater than the second revolution speed threshold.

### < Example 2>

For example, the event analyzer (32) extracts, as an event, the occurrence of sudden deceleration in the rapid speed of the engine speed based on the time-series change of the speed command signal indicated by the time-series speed command information received from the information acquiring equipment (101).

More specifically, for example, when the event analyzer (32) receives the reception notification from the communication module (31) indicating that the vessel information group including the time-series speed command information has been received, the rapid speed of the engine speed determines whether the sudden deceleration of the engine speed has occurred.

Specifically, when the event analyzer (32) receives a reception notification from the communication module (31) indicating that the vessel information group including the time-series speed command information has been received, it reads the vessel information group and the management table stored in the memory (34). The event analyzer (32) specifies the vessel name corresponding to the vessel ID included in the vessel information group by referring to the management table.

For example, the event analyzer (32) extracts the occurrence of the rapid increase in the engine speed when the command speed is rapidly increasing in the time-series change of the speed command signal indicated by the time-series speed command information. Specifically, the event analyzer (32) extracts the occurrence of the rapid increase in the engine speed when the amount of change in the command speed per module time is equal to or greater than a predetermined threshold value Th11.

Alternatively, for example, the event analyzer (32) extracts the occurrence of the rapid increase in the engine speed based on the command speed of the speed command signal and an actual engine speed (hereinafter also referred to as a "corresponding engine speed") at the sensor measurement time corresponding to the time when the speed command signal is measured. Specifically, the event analyzer (32) extracts the occurrence of a rapid increase in the engine speed when the command speed indicated by at least one of the speed command signals is larger than the corresponding engine speed by a predetermined threshold value Th12 or more in the time-series change of the speed command signal.

On the other hand, the event analyzer (32) determines that the rapid increase in the engine speed has not occurred when the speed command signal indicating the command speed larger than the corresponding engine speed by a threshold value Th12 or more is not included in the time-series change of the speed command signal.

Then, the event analyzer (32) creates the rapid increase in the engine speed information including the extraction result indicating the occurrence of the rapid increase in the engine speed on the specified vessel name vessel (10) and the event specific time as the event occurrence information and outputs it to the display processing module (33).

For example, the event analyzer (32) extracts the occurrence of the rapid decrease in the engine speed when the command speed is rapidly decreasing in the time-series change of the speed command signal. Specifically, the event analyzer (32) extracts the occurrence of the rapid decrease in the engine speed when the amount of change in the command speed per module time is less than a predetermined threshold value Th13.

Alternatively, for example, the event analyzer (32) extracts the occurrence of the rapid decrease in the engine speed based on the command speed indicated by the speed command signal and the corresponding engine speed. Specifically, the event analyzer (32) extracts the occurrence of sudden deceleration of the engine speed when the command speed indicated by at least one of the speed command signals is smaller than the corresponding engine speed by a predetermined threshold value Th14 or more in the time-series change of the speed command signal.

Alternatively, for example, the event analyzer (32) extracts the occurrence of sudden deceleration of the engine speed when the time-series change of the speed command signal includes the speed command signal indicating the command speed corresponding to the crash astern.

On the other hand, the event analyzer (32) determines that sudden deceleration of the engine speed has not occurred when the time-series change of the speed command signal does not include the speed command signal indicating the command speed at which the change amount of the command speed per module time is not less than the threshold value Th13 and is not less than the threshold value Th14 than the corresponding engine speed and the speed command signal indicating the command speed corresponding to the crash astern.

When the event analyzer (32) extracts the occurrence of sudden deceleration of the engine speed, it creates the sudden deceleration information including the extraction result indicating the occurrence of sudden deceleration of the engine speed on the specified vessel name vessel (10) and the event specific time, and outputs it to the display processing module (33) as the event occurrence information.

### [Steering]

### < Example 1>

For example, the event analyzer (32) extracts the occurrence of a sudden rudder on the vessel (10) as an event based on the time-series change of the rudder angle indicated by the time-series rudder angle information received from the information acquiring equipment (101).

More specifically, for example, the event analyzer (32) determines whether a sudden rudder has occurred on the vessel (10) when the communication module (31) receives a reception notification indicating that the vessel information group including the time-series speed information and the time-series rudder angle information has been received.

Specifically, the event analyzer (32) reads the vessel information group and the management table stored in the memory (34) when the communication module (31) receives a reception notification indicating that the vessel information group including the time-series speed information and the time-series rudder angle information has been received. The event analyzer (32) then specifies the vessel name corresponding to the vessel ID included in the vessel information group by referring to the management table.

The event analyzer (32) confirms a speed measurement time (hereinafter also referred to as a "target speed time") at which the speed of the vessel (10) is equal to or greater than the speed threshold among a plurality of speed measurement times which are the plurality of sensors measurement times indicated by speed information in a time-series included in the vessel information group.

After confirming the target speed time, the event analyzer (32) refers to the steering angle information included in the vessel information group and specifies a steering angle measurement time corresponding to the confirmed target speed time among a plurality of steering angle measurement times which are the plurality of sensors measurement times indicated by the steering angle information.

For example, in the same manner as the correspondence processing shown in Figure 7, the event analyzer (32) specifies a steering angle measurement time among a plurality of the steering angle measurement times indicated by the steering angle information in the time-series, as the steering angle measurement time corresponding to the target speed time. In this case, the steering angle measurement time is later than the speed measurement time immediately before the target speed time and before the speed time.

In the same manner, as the correspondence processing shown in Figure 8, the event analyzer (32) may specify the steering angle measurement time which is closest to the target speed measurement time among a plurality of steering angle measurement times indicated by the steering angle information in the time-series as a steering angle measurement time corresponding to the target speed time.

The steering angle at the steering angle measurement time is a positive value and a negative value when, for example, the vessel (10) turns clockwise and counterclockwise, respectively. After the event analyzer (32) specifies the steering angle measurement time corresponding to the target speed time, when the steering angle at the steering angle measurement time is a positive value, it checks whether the steering angle is equal to or greater than a predetermined first threshold value. When the steering angle at the specified steering angle measurement time is a negative value, the event analyzer (32) checks whether the steering angle is equal to or less than a predetermined second threshold value.

When the steering angle of the positive value is equal to or greater than the first threshold value, when the steering angle of the negative value is equal to or less than the second threshold value at the specified steering angle measurement time, the event analyzer (32) extracts the occurrence of sudden steering on the vessel (10) as an event. In this case, the event analyzer (32) determines that the steering angle measurement time is the event specific time.

Then, the event analyzer (32) creates the sudden steering information including the extraction result indicating the occurrence of the sudden steering on the vessel (10) with the specified vessel name and the event specific time, and outputs it to the display processing module (33) as the event occurrence information.

On the other hand, when the target speed time is not included in the speed information of the time-series, the event analyzer (32) determines that no sudden steering has occurred in the vessel (10) when the positive value of the steering angle is less than the first threshold value and the negative value of the steering angle is greater than the second threshold value at the steering angle measurement time.

### < Example 2>

For example, the event analyzer (32) extracts the occurrence of a sudden rudder on the vessel (10) as an event based on the time-series change of the rudder angle command signal indicated by the time-series rudder angle command information received from the information acquiring equipment (101).

More specifically, for example, the event analyzer (32) determines whether a sudden rudder has occurred on the vessel (10) when the communication module (31) receives the reception notification indicating that the vessel information group including the time-series speed information and the time-series rudder angle command information has been received.

Specifically, the event analyzer (32) reads the vessel information group and the management table stored in the memory (34) when the communication module (31) receives the reception notification indicating that the vessel information group including the time-series speed information and the time-series rudder angle command information has been received. The event analyzer (32) then specifies the vessel name corresponding to the vessel ID included in the vessel information group by referring to the management table.

When the event analyzer (32) confirms the target speed time in the time-series speed information, it refers to the steering angle command information included in the vessel information group and specifies the steering angle command time corresponding to the confirmed target speed time among the plurality of steering angle command times which are the plurality of sensor measurement times indicated by the steering angle command information.

For example, the event analyzer (32) specifies the steering angle command time corresponding to the target speed time among the plurality of steering angle command times indicated by the steering angle command information as the steering angle command time corresponding to the target speed time.

The event analyzer (32) may specify, for example, the steering angle command time closest to the target speed time among the plurality of steering angle measurement times indicated by the steering angle command information as the steering angle command time corresponding to the target speed time, similarly to the correspondence process shown in Figure 8. When the event analyzer (32) specifies the steering angle command time corresponding to the target speed time, it checks whether the command steering angle at the steering angle command time is equal to or greater than a predetermined threshold value.

The event analyzer (32) extracts the occurrence of a sudden rudder on the vessel (10) as an event when the command rudder angle at the specified rudder angle command time is equal to or greater than a threshold value. In this case, the event analyzer (32) determines the rudder angle command signal as the event specific time. Then, the event analyzer (32) creates the rudder information including the extraction result indicating the occurrence of the rudder on the specified vessel name vessel (10) and the event specific time, and outputs it as the event occurrence information to the display processing module (33).

On the other hand, the event analyzer (32) determines that the rudder has not occurred on the vessel (10) when the target speed time is not included in the time-series speed information, when the command rudder angle at the rudder angle command time is less than the threshold.

### [Deck Work]

For example, the event analyzer (32) extracts the occurrence of a predetermined work (hereinafter also referred to as "deck work".) on the deck of the vessel (10) as an event when at least one of the deck images included in the deck image information of the time-series received from the information acquiring equipment (101) contains a predetermined extraction target. The extraction target is, for example, a person.

More specifically, for example, when the event analyzer (32) receives the reception notification from the communication module (31) indicating that the vessel information group including the time-series speed information and the time-series deck image information has been received, it determines whether or not the deck work has been executed.

Specifically, when the event analyzer (32) receives the reception notification from the communication module (31) indicating that the vessel information group including time-series speed information and time-series deck image information has been received, it reads out the vessel information group and the management table stored in the memory (34). The event analyzer (32) then specifies the vessel name corresponding to the vessel ID included in the vessel information group by referring to the management table.

The event analyzer (32) confirms the target speed time at which the speed of the vessel (10) is equal to or greater than the speed threshold among a plurality of the speed measurement times indicated by the speed information of the time-series included in the vessel information group.

When the target speed time is confirmed, the event analyzer (32) identifies the shot time corresponding to the confirmed target speed time among a plurality of the shot times indicated by the deck image information by referring to the deck image information included in the vessel information group.

Referring again to Figure 7, for example, the event analyzer (32) identifies, among a plurality of the shot times indicated by the deck image information in the time-series, the shot time after the speed measurement time immediately before the target speed time and before the target speed time as the shot time corresponding to the target speed time.

In Figure 7, for example, when the target speed time is the time t21, the shot time corresponding to the target speed time is the time t10 which is the time after the speed measurement time t20 and before the target speed time t21.

Referring again to Figure 8, for example, the event analyzer (32) may specify the shot time closest to the target speed time as the shot time corresponding to the target speed time among a plurality of the shot times shown in the deck image information of the time-series.

For example, in Figure 8, when the target speed time is the time t21, the shot time corresponding to the target speed time is the time t10, when the target speed time is the time t22, the shot time corresponding to the target speed time is the time t11.

When the event analyzer (32) specifies the shot time corresponding to the target speed time, it checks whether a person is included in the deck image (hereinafter also referred to as a "corresponding deck image") at the shot time.

When a person is included in the corresponding deck image, the event analyzer (32) extracts that deck work is being performed on the deck of the vessel (10) as the event. In this case, the event analyzer (32) determines that the shot time of the corresponding deck image is the event specific time. Then, the event analyzer (32) creates deck information including the extraction result indicating the occurrence of deck work on the vessel (10) of the specified vessel name and the event specific time, and outputs the deck information as the event occurrence information to the display processing module (33).

On the other hand, the event analyzer (32) determines that the deck work is not in progress when the speed information stored in the memory (34) does not include a speed greater than the speed threshold, and when the corresponding deck image does not include a person.

In the process of determining whether or not the deck work has been executed, the event analyzer (32) may confirm whether or not the deck image including a person is included in the deck image information received from the information acquiring equipment (101) without confirming the target speed time.

### [stormy weather]

For example, the event analyzer (32) extracts, as an event, that the weather at the position of the vessel (10) is stormy, based on the chronological change of the rocking angle indicated by the rocking angle information of the chronological rocking angle.

More specifically, for example, when the event analyzer (32) receives the reception notification from the communication module (31) indicating that the vessel information group including the rocking angle information of the chronological rocking angle has been received, it determines whether the weather at the position of the vessel (10) is stormy.

Specifically, when the event analyzer (32) receives the reception notification from the communication module (31) indicating that the vessel information group including the rocking angle information of the chronological rocking angle has been received, it reads the vessel information group and the management table stored in the memory (34). The event analyzer (32) then specifies the vessel name corresponding to the vessel ID included in the vessel information group by referring to the management table.

The event analyzer (32) calculates the swing width of a swing angle per predetermined module time based on the time-series change of the swing angle indicated by the time-series swing angle information. For example, the event analyzer (32) calculates the swing width of the swing angle per minute at a certain sensor measurement time in the time-series swing angle information included in the vessel information group. Here, the swing width of the swing angle per predetermined module time is, for example, the difference between the maximum value and the minimum value of the swing angle in the module time.

The event analyzer (32) checks whether the calculated swing width is equal to or greater than a predetermined threshold value (hereinafter also referred to as a "sway angle threshold").

When the calculated change amount is equal to or greater than the swing angle threshold value, the event analyzer (32) extracts that the weather at the position of the vessel (10) is stormy as an event. In this case, the event analyzer (32) determines that the sensor measurement time corresponding to the change amount is the event specific time. Then, the event analyzer (32) creates the sway angle information including the extraction result indicating the occurrence of severe weather at the position of the vessel (10) of the specified vessel name and the event specific time, and outputs it as the event extraction information to the display processing module (33).

On the other hand, when the calculated change amount is less than the sway angle threshold, the event analyzer (32) determines that the weather at the position of the vessel (10) is not severe. The event analyzer (32) calculates the change amount of the sway amount of the navigation camera (51a) per predetermined module time based on the time-series navigation image information, and when the change amount is equal to or greater than the predetermined threshold, it may extract that the weather at the position of the vessel (10) is severe as the event.

### [Approaching of another vessel]

For example, the event analyzer (32) extracts the approach of another vessel as an event based on the time-series change of the distance between the vessel (10) and the other vessel indicated by the time-series distance information.

More specifically, for example, when the event analyzer (32) receives the notification from the communication module (31) indicating that the vessel information group including the time-series distance information has been received, it determines whether the approach of another vessel has occurred.

Specifically, when the event analyzer (32) receives the reception notification from the communication module (31) indicating that the vessel information group including time-series distance information has been received, the event analyzer reads out the vessel information group and the management table stored in the memory (34). The event analyzer (32) then specifies the vessel name corresponding to the vessel ID included in the vessel information group by referring to the management table.

The event analyzer (32) checks whether the time-series change of the distance between the vessel (10) and another vessel indicated by the time-series distance information includes the sensor measurement time at which the distance is less than the predetermined distance threshold.

The event analyzer (32) extracts the approach of another vessel to the vessel (10) as the event when the time-series change of the distance between the vessel (10) and another vessel indicated by the time-series distance information includes the sensor measurement time at which the distance is less than the predetermined distance threshold. In this case, the event analyzer (32) determines that the sensor measurement time is the event specific time. Then, the event analyzer (32) creates approach information including the extraction result indicating the approach of another vessel to the specified vessel name vessel (10) and the event specific time, and outputs the information to the display processing module (33) as event occurrence information.

On the other hand, the event analyzer (32) determines that the approach of another vessel has not occurred when the time-series change of the distance between the vessel (10) and another vessel indicated by the time-series distance information does not include the sensor measurement time at which the distance is less than a predetermined distance threshold.

When the event analyzer (32) does not extract the occurrence of various events in the event extraction processing, the vessel information group used for the event extraction processing may be deleted from the memory (34). Thus, the storage capacity in the memory (34) can be saved.

Other devices other than the management server (201) may include the event analyzer (32) and perform the processing described above. For example, the device mounted on the vessel (10) may include an event analyzer (32) and transmit the generated event occurrence information and the vessel information group corresponding to the event occurrence information to the management server (201). Thus, the processing load on the management server (201) can be reduced.

### [List screen information]

When receiving the event occurrence information from the event analyzer (32), the display processing module (33) stores the event occurrence information in the memory (34) and creates an event list L showing the correspondence relation between the event indicated by the extraction result contained in the event occurrence information, the vessel name of the vessel (10) indicated by the extraction result, the port where the vessel (10) docks, and the event specific time contained in the event occurrence information. The display processing module (33) stores the created event list L in the memory (34).

The display processing module (33) creates list screen information S1 including the event list L. More specifically, when the terminal equipment (301) receives an instruction (hereinafter also referred to as a "list transmission instruction".) requesting the list screen information S1 from the user, it transmits the list instruction information indicating the received instruction contents to the management server (201).

When the management server (201) receives the list of instruction information from the terminal equipment (301), the communication module (31) outputs a notification indicating that the list of instruction information has been received by the display processing module (330).

When the display processing module (33) receives a notification indicating that the list instruction information has been received from the communication module (31), it reads out the event list L stored in the memory (34). Then, the display processing module (33) creates list screen information S1 including an area R11 indicating the event list L and an area R12 indicating the display button Bt10.

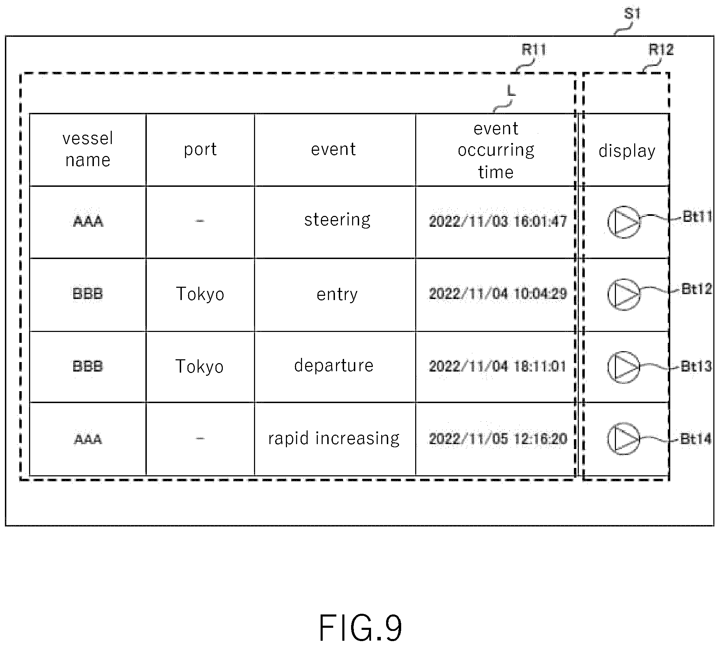

Figure 9 is a diagram showing an example of list screen information created by a management server according to an embodiment of the present invention.

Referring to Figure 9, in a list screen information S1, a "sudden turn" occurs at the event specific time "2022/11/03 16:01:47" on the vessel (10) with the vessel name "AAA". In the case of the vessel (10) with the vessel name "BBB", a "port arrival" at "Tokyo" port occurs at the event specific time "2022/11/4 10:04:29", and a "port departure" occurs from "Tokyo" port at the event specific time "2022/11/4 18:11:01". In the case of the vessel (10) with the vessel name "AAA", a "rapid speed increase" of the engine speed occurs at the event specific time "2022/11/05 12:16:20".

In the list screen information S1, display buttons Bt11, Bt12, Bt13, and Bt14 which are display buttons Bt10 are displayed. The display button Bt11 corresponds to the event "rapid turning", the display button Bt12 corresponds to the event "entering the port", the display button Bt13 corresponds to the event "leaving the port", and the display button Bt14 corresponds to the event "rapid speed".

When the display processing module (33) creates the list screen information S1, it transmits the created list screen information S1 to the terminal equipment (301) via the communication module (31).

When the terminal equipment (301) receives the list screen information S1 from the management server (201), it displays an event list screen showing the list screen information S1 on its monitor or the like. The display processing module (33) may transmit an HTML (Hyper Text Markup Language) format e-mail including the event list screen to the terminal equipment (301) via the communication module (31).

### [Event extraction screen information]

The management server (201) performs display processing for displaying image information, measurement information, and position information received from the information acquiring equipment (101) in association with a specific time. Here, the specific time is, for example, the event specific time.

More specifically, when the management server (201) receives a display instruction (hereinafter also referred to as an "event specific instruction") of the image information, the measurement information, and the position information corresponding to a specific event from the user while the event list screen is displayed on the terminal equipment (301), the management server performs display processing in accordance with the event specification instruction.

Specifically, when the user depresses one of the plurality of display buttons Bt10 on the event list screen, the terminal equipment (301) transmits event specification information indicating the display button Bt10 on which the operation is performed and the event specification instruction to the management server (201).

When the management server (201) receives the event specification information from the terminal equipment (301), the communication module (31) outputs the received event specification information to the display processing module (33).

For example, the display processing module (33) selects a plurality of voyage image information (hereinafter also referred to as "corresponding image information") from the time-series voyage image information stored in the memory (34) corresponding to the event extracted by the event analyzer (32).

For example, the display processing module (33) selects a plurality of measurement information (hereinafter also referred to as "corresponding measurement information") from the time-series measurement information stored in the memory (34), corresponding to the event extracted by the event analyzer (32).

For example, the display processing module (33) selects a plurality of position information (hereinafter also referred to as "corresponding position information") from the time-series position information stored in the memory (34), corresponding to the event extracted by the event analyzer (32).

Specifically, when the display processing module (33) receives the event specific information from the communication module (31), it acquires event occurrence information about the event corresponding to the display button Bt10 indicating the event specific information from the memory (34) and confirms the event specific time included in the event occurrence information. Then, the display processing module (33) acquires navigation image information, measurement information, and position information corresponding to the confirmed event specific time from the memory (34).

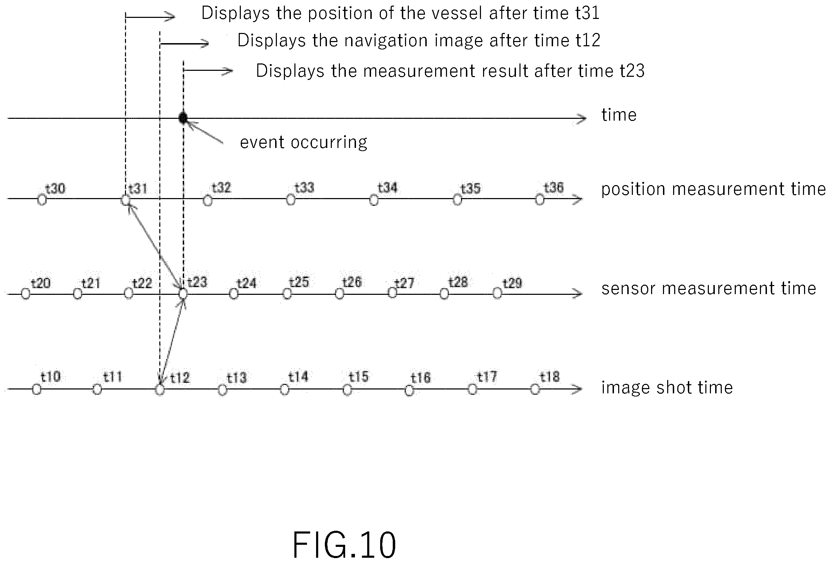

Figure 10 schematically shows an example of display processing by the management server according to an embodiment of the present invention.

Referring to the FIG. 10, for example, when the event specific time included in the event occurrence information acquired from the memory (34) is the sensor measurement time t23, the display processing module (33) selects the measurement information after the sensor measurement time t23 as the corresponding measurement information. The display processing module (33) selects the navigation image information after the shot time (12), which is the most recent of the shot times before the sensor measurement timet23, as the corresponding image information. The display processing module (33) selects the position information after the position measurement time t31, which is the most recent of the position measurement times before the sensor measurement time t23, as the corresponding position information.

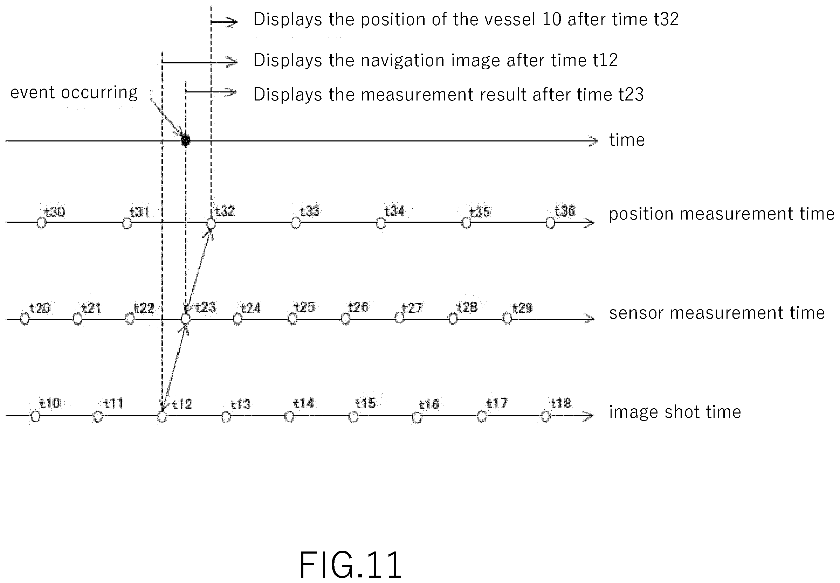

Figure 11 is a diagram conceptually showing another example of display processing by a management server according to an embodiment of the present invention.

Referring to Figure 11, for example, when the event specific time is the sensor measurement time t23, the display processing module (33) may select the navigation image information at the shot time (12) or later closest to the sensor measurement time t23 as corresponding image information. The display processing module (33) may select position information at the position measurement time t32 or later closest to the sensor measurement time t23 as corresponding position information.

Then, the display processing module (33) performs processing to display corresponding image information, corresponding measurement information, and corresponding position information in association with the event specific time as display processing.

Specifically, the display processing module (33) creates the event extraction screen information S2 using the event occurrence information and the selected corresponding image information, corresponding measurement information, and corresponding position information. Then, the display processing module (33) transmits the created event extraction screen information S2 to the terminal equipment (301) via the communication module (31). The display processing module (33) stores the created event extraction screen information S2 in the memory (34).

When the terminal equipment (301) receives the event extraction screen information S2 from the management server (201), it displays the event extraction screen showing the event extraction screen information S2 on its monitor or the like. The display processing module (33) may transmit the HTML e-mail including the event extraction screen to the terminal equipment (301) via the communication module (31).

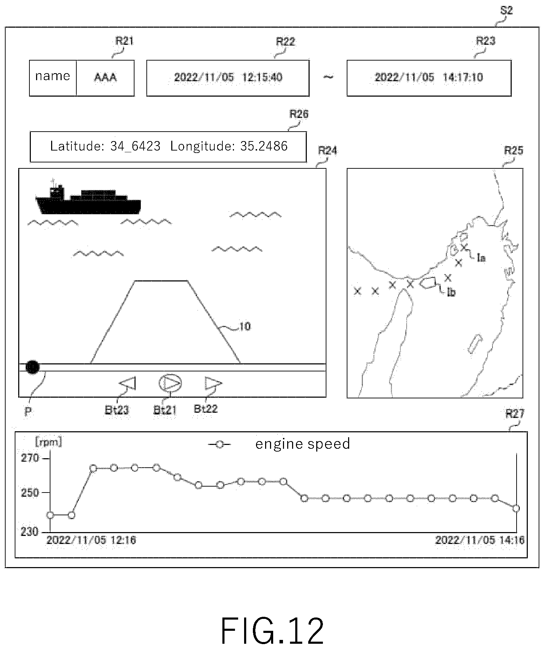

Figure 12 is a diagram showing an example of the event extraction screen information created by the management server according to the embodiment of the present invention.

Referring to Figures 3 and 12, the display processing module (33) creates event extraction screen information S2 including, for example, regions R21, R22, R23, R24, R25, R26, and R27. The region R21 indicates, for example, the name of the vessel (10) that extracted the occurrence of the event. In the example shown in figure 12, the region R21 indicates the vessel name "AAA".

The region R22 indicates, for example, the oldest shot time in the corresponding image information selected by the display processing module (33). The region R23 indicates, for example, the newest shot time in the corresponding image information. In the example shown in Figure 12, the regions R22 and R23 indicate that the shot time in the corresponding image information is from "2022/11/05 12:15:40" to "2022/11/05 14:17:10".

The area R24 shows, for example, a navigation image corresponding to the oldest shot time in the corresponding image information selected by the display processing module (33). That is, the area R24 shows a navigation image taken at the shot time indicated by the area R22.

The area R24 further includes, for example, a playback slider P as a UI (user interface), a playback button Bt21, a feed button Bt22, and a return button Bt23. The area R24 may not include the III.

The area R25 represents, for example, a time-series change in the position of the vessel (10) indicated by the corresponding position information selected by the display processing module (33). Specifically, the area R25 represents, for example, the time-series change superimposed on a chart. The time-series change is displayed by, for example, a plurality of icons Ia.

The display processing part (33) changes the display mode of the icon Ia selected by the user among the plurality of icons Ia. In the example shown in Figure 12, the icon Ia selected by the user changes to the icon Ib indicating a vessel. The user selects the icon Ia using an input device such as a keyboard. When the terminal equipment (301) is, for example, a tablet, the user may select the icon Ia through the touch panel of the tablet.

The area R26 indicates, for example, the position of the vessel (10) corresponding to the icon Ib in the area R25. In the example shown in Figure 12, the area R26 indicates that the position of the vessel (10) is "latitude: 34.6253 longitude: 135.2486."

The area R27 indicates the corresponding measurement information selected by the display processing module (33), for example. In the example shown in Figure 12, the area R27 indicates the time-series change of the engine speed since the event specific time "2022/11/05 12:16:20" of the event "surge speed" in the list screen information S1 shown in Figure 9.

For example, the display processing module (33) sequentially displays at least one of the corresponding image information, corresponding measurement information, and corresponding position information corresponding to the time period after the event specific time. Here, the display processing module (33) sequentially displays the corresponding image information corresponding to the time period after the event specific time.

More specifically, the display processing module (33) sequentially displays the corresponding image information after the shot time corresponding to the event specific time when the user performs a predetermined operation on the area R24 while the event extraction screen is displayed on the terminal equipment (301).

Specifically, the terminal equipment (301) transmits reproduction request information indicating the operation to the management server (201) when the user depresses the reproduction button Bt21 on the event extraction screen.

When the management server (201) receives reproduction request information from the terminal equipment (301), the communication module (31) outputs the received reproduction request information to the display processing module (33).

When the display processing module (33) receives the reproduction request information from the communication module (31), it reads the event extraction screen information S2 stored in the memory (34). Then, the display processing module (33) acquires from the memory (34) a plurality of navigation images taken after the shot time immediately after the shot time indicated by the area R22 included in the event extraction screen information S2 and up to the shot time indicated by the area R23.

The display processing module (33) transmits the acquired plurality of navigation images to the terminal equipment 301 via the communication module 31.

When the terminal equipment (301) receives the plurality of navigation images from the management server (201), it sequentially displays the plurality of navigation images in the area R24 included in the event extraction screen information S2.

### [Flow of operation]

Each device in the display system (501) according to the embodiment of the present invention is provided with a computer including a memory, and an arithmetic processing module such as a CPU in the computer reads and executes a program including all of the steps in the following flowchart from the memory. The programs of the plurality of devices can be installed from the outside. When the programs of the plurality of devices are stored in the recording medium, they flow through the communication line.

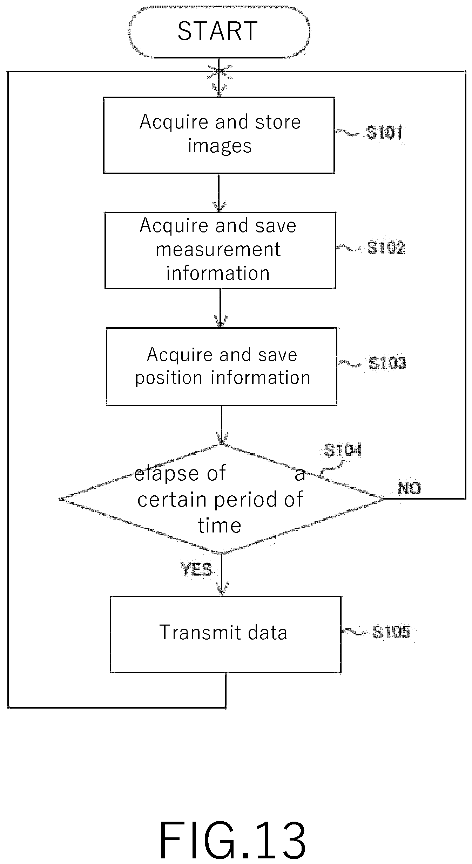

Figure 13 is a flowchart defining an operation procedure for carrying out transmission processing by the information acquiring equipment according to an embodiment of the present invention.

First, the information acquiring equipment (101) acquires the time-series image information from the camera (51) and stores it in the memory (26) (step S101).

Next, the information acquiring equipment (101) acquires the time-series measurement information from the sensor (52) and stores it in the memory (26) (step S102).

Next, the information acquiring equipment (101) acquires the time-series position information from the GNSS receiver (53) and stores it in the memory (26) (step S103). Step S101, step S102, and step S103 may be executed in an alternate order or in parallel.

The information acquiring equipment (101) stores the new time-series image information acquired from the camera (51), the new measurement information acquired from the sensor (52), and the new time-series position information acquired from the GNSS receiver (53) in the memory (26) (steps S101 to S103) until a certain time elapses after the self-start (NO in step S 104).

Then, when a certain time elapses after the self-start (YES in step S 104), the information acquiring equipment (101) creates a vessel information group including the time-series image information, the time-series measurement information, the time-series position information, and the vessel ID stored in the memory (34) and transmits it to the management server (201) (step S105).

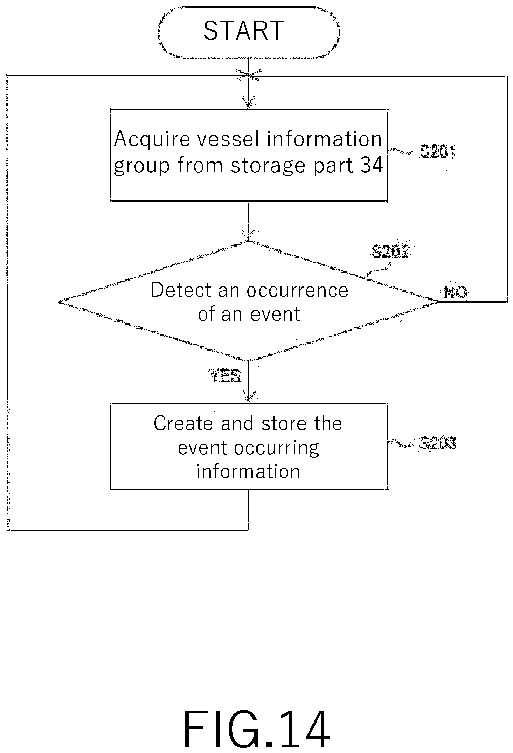

Figure 14 is a flowchart defining an operation procedure of the event extraction process by the management server according to an embodiment of the present invention.

Referring to Figure 14, the management server (201) first acquires the vessel information group received from the information acquiring equipment (101) from the memory (34) (step S201).

Next, when the management server (201) extracts the occurrence of an event on the vessel (10) based on the acquired vessel information group (YES in step S 202), it creates event occurrence information including the type of the extracted event and the event specific time and stores it in the memory (34) (step S203).

On the other hand, when the management server (201) does not extract the occurrence of an event on the vessel (10) (NO in step S 202), it receives a new vessel information group from the information acquiring equipment (101) and acquires the new vessel information group from the memory (34) (step S201).

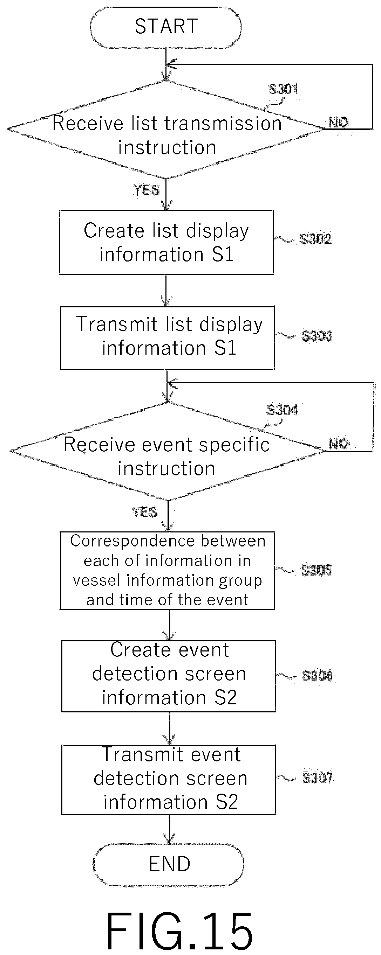

Figure 15 is a flowchart defining an operation procedure of display processing by the management server according to an embodiment of the present invention.

Referring to Figure 15, the management server (201) first waits for a list of transmission instructions from the terminal equipment (301) (NO in step S 301), and when it receives the list of transmission instructions from the terminal equipment (301) (YES in step S 301), creates list screen information S1 (step S302).

Next, the management server (201) transmits the created list screen information S1 to the terminal equipment (301) (step S303).

Next, when the management server (201) waits for the event specification instruction from the terminal equipment (301) (NO in step S 304) and receives the event specification instruction from the terminal equipment (301) (YES in step S 304), the management server associates each information contained in the vessel information group stored in the memory (34) with the event specific time (step S305).

Next, the management server (201) creates the event extraction screen information S2. For example, as described above, the management server (201) creates the event extraction screen information S2 using the corresponding image information, the corresponding measurement information, and the corresponding position information corresponding to the extracted event (step S306).

Next, the management server (201) transmits the created event extraction screen information S2 to the terminal equipment 301 (step S307).

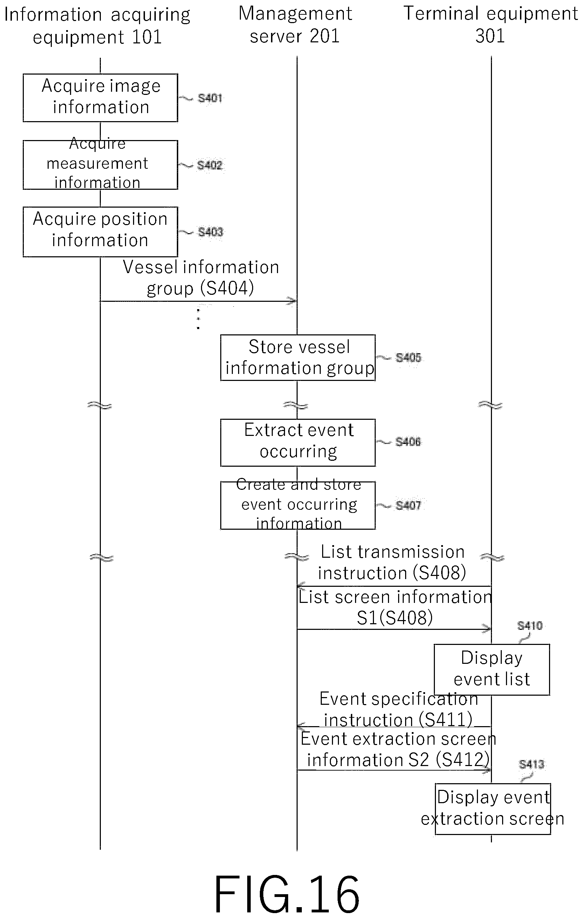

Figure 16 is a diagram showing an example of a sequence of processing of the information acquiring equipment, the management server, and the terminal equipment in the display system according to an embodiment of the present invention.

Referring to Figure 16, the information acquiring equipment (101) first acquires the time-series image information from the camera (51) (step S401).

Next, the information acquiring equipment (101) acquires time-series measurement information from the sensor (52) (step S402).

Next, the information acquiring equipment (101) acquires the time-series position information from the GNSS receiver 53 (step S403).

Next, the information acquiring equipment (101) transmits the acquired vessel information group including time-series image information, time-series measurement information, time-series position information, and vessel ID to the management server (201) (step S404).

Next, the management server (201) stores the vessel information group received from the information acquiring equipment (101) in the memory (34) (step S405).

Next, the management server (201) extracts the occurrence of an event on the vessel (10) based on the vessel information group stored in the memory (34) (step S406).

Next, the management server (201) creates event occurrence information including the type of the extracted event and the event specific time, and stores it in the memory (34) (step S407).

Next, the terminal equipment (301) transmits a list transmission instruction instructing the transmission of list screen information to the management server (201) (step S408).

Next, when the management server (201) receives the list transmission instruction from the terminal equipment (301), it transmits the list screen information S1 to the terminal equipment (301) (step S409).

Next, when the terminal equipment (301) receives the list screen information S1 from the management server (201), it displays the list screen showing the list screen information S1 on its monitor or the like (step S410).

Next, the terminal equipment (301) transmits an event specification instruction instructing the transmission of the event extraction screen information to the management server (201) (step S411).

Next, when the management server (201) receives the event specification instruction from the terminal equipment (301), it transmits the event extraction screen information S2 to the terminal equipment (301) (step S412).

Next, upon receiving the event extraction screen information S2 from the management server (201), the terminal equipment (301) displays an event extraction screen showing the event extraction screen information S2 on its monitor or the like (step S413).

### [Modified example]

The management server (201) may extract the occurrence of an event based on information other than information about the vessel (10).

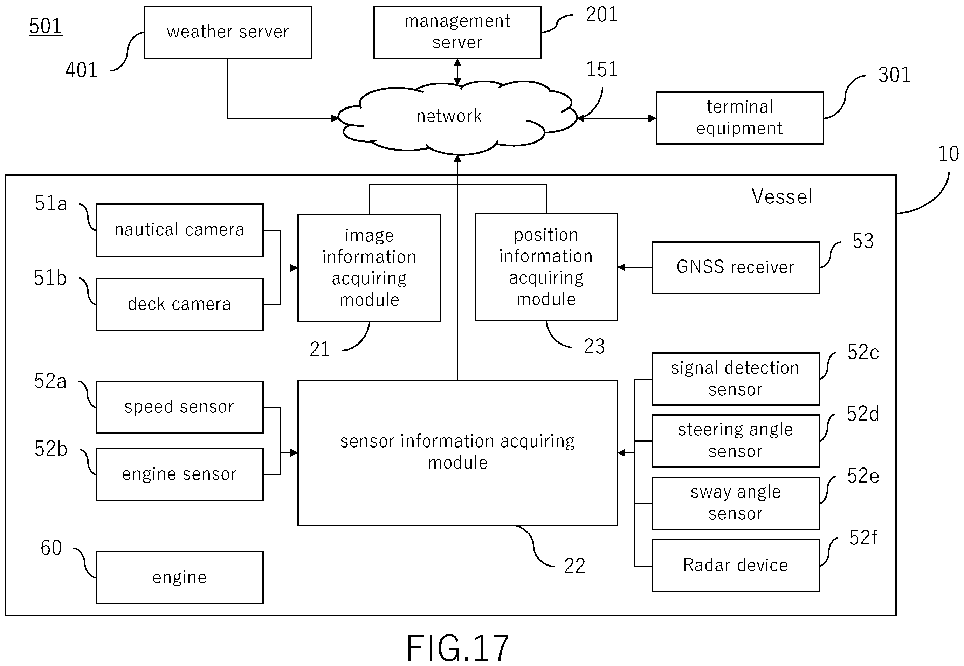

Figure 17 is a diagram showing a configuration of a modification of the display system according to an embodiment of the present invention. Referring to Figure 17, the display system (501) further includes a weather server (401). The weather server (401) holds, for example, time-series weather information in a sea area. The weather server (401) is, for example, an API (Web Application Programming Interface) server. Time-series weather information indicates, for example, time-series changes in air volume.

Specifically, for example, when the management server (201) receives the vessel information group from the information acquiring equipment (101), the management server transmits request information requesting time-series weather information for the vessel (10) corresponding to the vessel information group at the voyage date and time to the weather server (401) via the external network (151).

When the management server receives the request information from the management server (201), for example, the management server (401) transmits time-series weather information for the vessel (10) at the voyage date and time to the management server (201) via the external network (151) in accordance with the request information.

In a modified example, the management server (201) further performs event extraction processing based on weather information received from the weather server (401). For example, the management server (201) determines whether or not the weather at the position of the vessel (10) is stormy based on the time-series change of the air volume indicated by the weather information.

More specifically, when the management server (201) receives the time-series weather information from the weather server (401), the communication module (31) stores the received weather information in the memory (34) and outputs a notification indicating that the weather information has been received to the event analyzer (32).

When the communication module (31) receives the notification indicating that the time-series weather information has been received, the event analyzer (32) reads the weather information stored in the memory (34). The event analyzer (32) then checks whether the time-series change of the air volume indicated by the weather information includes a time when the air volume is equal to or greater than a predetermined threshold value.

If the time-series change of the air volume includes a time when the air volume is equal to or greater than a threshold value, the event analyzer (32) extracts that the weather at the position of the vessel (10) is stormy as an event. In this case, the event analyzer (32) determines that the time is an event specific time. Then, the event analyzer (32) creates weather information including the extraction result indicating the occurrence of severe weather at the position of the specified vessel name of the vessel (10) and the event specific time, and outputs it as event occurrence information to the display processing module (33).

When the display processing module (33) receives the event occurrence information from the event analyzer (32), it creates an event list L indicating the correspondence relation between the event "severe weather" indicated by the extraction result included in the event occurrence information, the specified vessel name, and the event specific time, and stores it in the memory (34). When the display processing module (33) receives the event specification instruction for the event "severe weather" while the event list screen is displayed on the terminal equipment (301), it displays image information, measurement information, and position information in correspondence with the time when the air volume is equal to or greater than the threshold value.

A part of the functions of the management server (201) according to the embodiment of the present invention may be provided entirely by cloud computing. That is, the management server (201) according to the embodiment of the present invention may be a cloud server composed of a plurality of servers.

In the display system (501) according to the embodiment of the present invention, the information acquiring equipment (101) is configured to receive, from the radar device (52f), time-series measurement information indicating a time-series change in the distance between the vessel (10) and another vessel, but this is not limited thereto.

The vessel (10) may be equipped with an AIS (Automatic Identification System) for automatically identifying other vessels. In this case, the information acquiring equipment (101) calculates distance information indicating a time-series change in the distance between the position of the vessel (10) and the position of other vessels based on the position information of other vessels periodically acquired from the AIS and the position information of the vessel (10) acquired from the GNSS receiver (53) and transmits the distance information to the management server (201). The management server (201) then determines whether or not the approach of other vessels has occurred based on the distance information received from the information acquiring equipment (101).

The above embodiments should be considered to be illustrative and not restrictive in all respects. It is intended that the scope of the present invention be indicated by the claims rather than the above description and include all changes within the meaning and scope of the claims and equivalence.

### DESCRIPTION OF REFERENCE NUMERALS

10 water-surface or underwater movable body (vessel)
21 image information acquiring module
22 sensor information acquiring module
23 position information acquiring module
24, 31 communication module
25 controller
26, 34 memory
32 event analyzer
33 display processing module
51, 51a, 51b camera (image sensor)
52 sensor
52a speed sensor
52b engine sensor
52c signal extraction sensor
52d steering angle sensor
52e sway angle sensor
52f radar device
101 information acquiring equipment
201 management server
301 terminal equipment
401 weather server
501 display system

## Claims

1. An image display processing system (501), comprising:
an image information acquiring module (21) configured to acquire an image information including a plurality of images shot on a water-surface or underwater movable body (10) and shot times associated with the plurality of images shot on the water-surface or underwater movable body (10), respectively;
a position information acquiring module (23) configured to acquire a position information including positions of the water-surface or underwater movable body (10) and position measurement times associated with the positions of the water-surface or underwater movable body (10), respectively;
a terminal equipment (301) configured to receive a specific time; and
a display processing module (33) configured to select an image and a position corresponding to the selected image, based on the shot time and the position measurement time associated with the specific time.

2. The image display processing system (501) of claim 1, further comprising:
an event analyzer (32) configured to
extract an event associated with the water-surface or underwater movable body (10); and
determine the specific time at which the event occurs based on either the image information or the position information; and wherein
the display processing module (33) is configured to select the image and the position based on the specific time, and
output data of the selected image and the selected position.

3. The image display processing system (501) of the claim 2, wherein:
the display processing module (33) is further configured to output data to sequentially display a time-series image information and a time-series position information corresponding to a time zone after the specific time of the event.

4. The image display processing system (501) of the claim 2 or 3, wherein:
the time-series image information includes a plurality of the images shot at a predetermined location of the water-surface or underwater movable body (10) and the shot time associated with each of the images; and
the event analyzer (32) is further configured to extract a predetermined operation in the water-surface or underwater movable body (10) based on the image in which a predetermined extraction object is included in any of the plurality of images included in the time-series image information.

5. The image display processing system (501) of any of claims 2 to 4, further comprising:
a sensor information acquiring module (22) configured to acquire time-series sensor information including the measurement results measured by a sensor (52) arranged on the water-surface or underwater movable body (10) and measurement times associated with a time of the measurement, respectively; and
wherein the display processing module (21) is further configured to;
acquire the measurement information,
select the measurement information corresponding to the specific time, and
output image display data in which the selected measurement result is associated with the image information and the position information.

6. The image display processing system (501) of claim 5, wherein:
the event analyzer (32) is configured to determine the specific time at which the event occurs based on the sensor information, instead of the image information and the position information; and
wherein the display processing module (33) is configured to select the sensor result, in addition to the image and the position, based on the specific time, and
output data of the selected image, the selected position, and the selected measurement result.

7. The image display processing system (501) of claim 6, wherein:
the time-series measurement information includes a speed of the water-surface or underwater movable body (10), and
the event analyzer (32) is further configured to;
extract the specific time based on the position and the speed and
determine a port entry or departure of the water-surface or underwater movable body (10).

8. The image display processing system (501) of claim 6, wherein:
the time-series measurement information includes a command signal for controlling a rotational speed of a propulsion drive mounted on the water-surface or underwater movable body (10) or a rotational speed of the propulsion drive, and
the event analyzer (32) is further configured to;
extract the specific time based on the controlling signal or the rotational speed and
determine a port entry or departure of the movable body.

9. The image display processing system (501) of claim 6, wherein:
the time-series measurement information includes a steering angle command signal for controlling the steering angle of the movable body, and
the event analyzer (32) is further configured to extract the occurrence of the event based on the steering angle command signal.

10. The image display processing system (501) of claim 6, wherein:
the time-series measurement information includes a time-series fluctuation angle indicating a time-series change in a fluctuation angle of the water-surface or underwater movable body (10), and
the event analyzer (32) is further configured to determine an event sea condition at the measured time and position corresponding to the fluctuation angle based on the fluctuation angle.

11. The image display processing system (501) of claim 6, wherein
the time-series measurement information includes a target position relation information indicating a relative position relation between the water-surface or underwater movable body (10) and a target located around the water-surface or underwater movable body (10), and
the event analyzer (32) is further configured to determine an event approach of the target to the water-surface or underwater movable body (10), based on the relative position relation.

12. The image display processing system (501) of claim 6, wherein
when the relative position relation is within a predetermined range, the timing period for acquiring any of the image information, the measurement information, and the position information is changed.

13. The image display processing system (501) of any of claims 6 to 12, further
comprising:
a management server (201), disposed outside the water-surface or underwater movable body), configured to include the display processing module (33) and the event analyzer (32); and
wherein the management server (201) includes a communication module (31) configured to;
receive the image information, the position information, and the measurement information and
output the received information to the event analyzer.

14. An image display processing method, comprising:
acquiring an image information (21) including a plurality of images shot on water-surface or underwater movable body (10) and shot times associated with the plurality of images shot on the water-surface or underwater movable body (10), respectively;
acquiring a position information (23) including positions of the water-surface or underwater movable body (10) and position measurement times associated with the positions of the water-surface or underwater movable body (10), respectively;
extracting an event (32) associated with the water-surface or underwater movable body (10);
determining a specific time at which the event occurs based on the image information or the position information; and
selecting an image and a position corresponding to the selected image, based on the shot time and the position measurement time associated with the specific time.

15. The image display processing method of claim 14, further comprising:
acquiring time-series sensor information (22) including measurement results measured by a sensor (52) arranged on the water-surface or underwater movable body (10) and measurement times associated with a time of the measurement, respectively;
selecting the measurement information corresponding to the specific time;
outputting image display data in which the selected measurement result is associated with the image and the position information.
